# EUROPEAN PATENT SPECIFICATION

(11) **EP 4 003 915 B1**
(45) Date of publication and mention of the grant of the patent: **21.05.2025**
(21) Application number: 20747465.1
(22) Date of filing: 24.07.2020
(51) Int. Cl.: C01G 19/02, B01J 37/02, C01B 33/14, C01G 23/053, C01G 25/02, C08B 31/00, C08J 5/00, C09D 7/62, C09D 7/40, D21H 17/28, C08J 3/20, C08J 3/21, C08L 3/08, C08L 5/08, C09D 1/00, C09D 5/00, D21H 19/54

(54) **SOLS, MULTIFUNCTIONAL APPLICATIONS OF SOLS, AND ASSOCIATED PRODUCTS**
SOLEN, MULTIFUNKTIONSANWENDUNGEN VON SOLEN UND ZUGEHÖRIGE PRODUKTE
SOLS, APPLICATIONS MULTIFONCTIONNELLES DE SOLS ET PRODUITS ASSOCIÉS

(30) Priority: 26.07.2019 GB 201910744; 26.07.2019 GB 201910748; 12.02.2020 GB 202001928; 12.02.2020 WO PCT/GB2020/050325
(43) Date of publication of application: 01.06.2022
(73) Proprietor: Green Sol-gel Ltd, Sittingbourne, Kent ME9 8GA (GB)
(72) Inventor: ISMAIL, Fanya, Kent ME9 8GA (GB)
(74) Representative: Privett, Marianne Alice Louise
(86) International application number: PCT/GB2020/051783
(87) International publication number: WO 2021/019220

(56) References cited:
- EP-A1- 0 973 958
- EP-B1- 0 973 958
- US-A- 4 540 777
- US-A1- 2019 136 073
- RAMEZANI MAJID ET AL: "Controlled Synthesis, Characterization, and Photocatalytic Application of Co2TiO4Nanoparticles", JOURNAL OF ELECTRONIC MATERIALS, WARRENDALE, PA, US, vol. 46, no. 2, 21 November 2016 (2016-11-21), pages 1371 - 1377, XP036133404, ISSN: 0361-5235, [retrieved on 20161121], DOI: 10.1007/S11664-016-5129-6

## Description

### INTRODUCTION

The present invention relates to colloidal solutions (known as sols), the use of sols to impart desirable properties to products, products made using sols, and methods of using such sols.

The properties of materials used in commercial products are often important to the intended function or use of a given product. For example, paper, cardboard and other materials are commonly used as packaging for commercial products. The material properties of a packaging product, such as the permeability of packaging materials to water, oils and other fluids may be controlled by using functionalised coatings utilising impermeable plastic materials or composites. In many industries such as the food and beverage industry, plastics may be applied to otherwise permeable media to facilitate the retention of liquid products within a particular packaging item. Similar methods may also be used to prevent the ingress of fluid into an item that may become compromised by exposure to water, air or other fluids. In an example, some paper or cardboard products are subjected to a process called internal sizing or surface sizing wherein hydrocarbon-derived materials such as microplastics are used to modify the porosity, adsorption, wear resistance, or other properties of the material. In another example, the growth of microbes (such as bacteria, fungi, viruses and parasites) in commercial products is commonly controlled using disinfectants, however, disinfectant use can result in environmental harm and is associated with the formation of resistant strains of microbes. Anti-microbial coatings provide an alternative means of controlling microbial growth. Conventional anti-microbial coating compositions rely on the biocidal action of copper, silver, zinc or organic additives such as phenolic biocides, quaternary ammonium compounds and fungicides. These materials interfere with the spread of microbes through various mechanisms, such as binding to the microbes and interfering with their respiration or the destruction of microbial proteins and/or cell walls. The material feedstocks used to produce existing functionalised coatings are generally produced from feedstocks with an associated environmental cost. For example, metallic coatings may originate from mining activities whereas plastic materials are generally sourced from hydrocarbon feedstocks. The materials or chemicals used to manufacture such materials and the associated by-products may also be toxic. Some materials may also degrade over time to produce particulates such as microplastics. Additionally, many such materials may release potentially harmful species through use. Consequently, there are ongoing health and environmental concerns in relation to many common materials found in both consumer products and the industrial environment.

The inventor of the present invention has found a novel, innovative and non-toxic alternative to conventional functional coating compositions in the form of a sol. In this context, the term 'sol' refers to a dispersion of colloidal particles in a liquid solvent. A sol may also be referred to as a sol mixture. Many sols formed from small colloidal particles are substantially clear and colourless. For example, sols formed from silicon-based functional materials will generally be clear and colourless as the particles forming the sol are sufficiently small that they do not scatter light. Some sols formed from larger particles may be coloured and/or at least partially opaque. For example, sols formed from titanium-based functional materials may be visibly white. Sols may form impermeable and/or anti-microbial and/or alternatively functional coating compositions when applied to a range of materials. Consequently, sols may be used as a barrier and/or as an anti-microbial coating composition and may provide other functionalities such as hydrophobicity, oleophobicity, anti-fouling, anti-biofouling, stain resistance, optical transparency, optical opacity, anti-reflectivity, and adhesion promotion. Sols used as a barrier may provide a barrier to liquids, vapours and/or gases such as oxygen. Sols may comprise readily available natural materials that ensure the resulting sols are inexpensive. Additionally, sols may be directly applied to a surface, i.e. without the surface needing to undergo a special preparation process, ensuring that sols are easy to use. Furthermore, some sols have been shown to provide a durable and thermally resistant coating, demonstrating that sols may form resilient and long-lasting functional coatings. US4540777 A relates to the modification of starch by silanes performed by bringing the starch into intimate contact with the hydrolyzates of the silanes in the presence of alkali aluminates or alkali hydroxides. Ramezani et al, 2016, Journal of Electronic Materials, volume 46, pages 1371-1377, relates to the synthesis of Co₂TiO₄ nanoparticles through the sol-gel method. US2019/136073 A1 relates to formation of a substrate with a superhydrophobic coating, wherein the superhydrophobic coating includes a binding layer disposed on the substrate, and a hydrophobic layer disposed on the binding layer, wherein the hydrophobic layer includes perfluoroalkyl-functionalized silica nanoparticles.

According to the present invention, there is provided the use of a sol formed from a solvent, an alkoxide, a biopolymer, and a catalyst to prepare a water impermeable product. The invention further provides a water impermeable fibre-based product prepared using a sol. According to another aspect of the invention, there is provided a sol comprising a solvent, an alkoxide, a biopolymer, and a catalyst. A method of making a sol comprising a solvent, an alkoxide, a biopolymer, and a catalyst is also provided. The method comprises: a) dispersing a biopolymer in a solution comprising a catalyst and then adding an alkoxide; b) dispersing an alkoxide in a solvent, adding a catalyst and then adding a biopolymer; or c) dispersing an alkoxide in a solution comprising a catalyst and then adding a biopolymer. Yet another aspect of the invention provides a coated product wherein the product has been coated with a sol comprising a solvent, an alkoxide, a biopolymer and/or polysaccharide, and a catalyst. Disclosed herein is a powder derived from a sol. These aspects and others will be apparent to the skilled practitioner in the art with the benefit of this disclosure. For the avoidance of doubt, the scope of the invention is defined by the appended claims.

### BRIEF DESCRIPTION OF THE DRAWINGS

Figure 1 is a Scanning Electron Microscope (SEM) image of the surface of a product to which a sol according to the present invention has been applied.
Figure 2 is a schematic cross-sectional illustration of the surface of a product following application of a sol according to the present invention.

### DETAILED DESCRIPTION

A sol may be formed by dispersing one or more materials of suitably small particle size in a solution. Some sols may further comprise additional components such as a catalyst or functional components. The sols suitable for use in the invention may be any sol that may be applied, coated or incorporated into a product to impart a beneficial property or characteristic to the resulting product. Sols suitable for use in the present invention will generally comprise a functional material and a solvent. In an example, the invention may be used with sols comprising a solvent, a functional metal alkoxide, a biopolymer and a catalyst. The term 'metal alkoxide' includes alkoxides comprising metals, organically modified alkoxides comprising metals, alkoxides comprising metalloids, and organically modified alkoxides comprising metalloids. The solvent used in the formation of the sol may comprise water, one or more alcohols, any other suitable solvent, or any combination thereof. Where present, the one or more alcohols may comprise methanol, ethanol, butanol, ethylene glycol, isopropanol, any other suitable alcohol, and any combination thereof. Bio-solvents such as bio-ethanol may also be used. The biopolymer may comprise starch-based polymer, hemi-cellulose-based polymer, cellulose-based polymer, lignin-based polymer, chitosan-based polymer, any other suitable biopolymer or modified biopolymer, and any combination thereof. The sol may additionally, or alternatively, comprise one or more flours derived from natural materials. Suitable flours may include oat flour, barley flour, rye flour, wheat flour, rice flour, bamboo flour, lentil flour, chickpea flour, pea flour, corn flour, or any combination thereof. Where the sol comprises a functional metal alkoxide, the alkoxide will generally conform to the general formula M(OR)ₓ or R_{C}-M(OR)ₓ, where "M" denotes any metal forming the metal alkoxide which may hydrolyse in the presence of a suitable solvent. "R" and "R_{C}" denote alkyl radicals of typically 1 to 30 carbon atoms which may take any suitable form such as straight chain, branched, aromatic or complex. "x" will generally equate to the valence of the corresponding metal ion "M". In an example, R may be a methyl, ethyl, propyl or butyl radical. Where a metal ion "M" has a valency in excess of 1, each R group may be the same. R_{C} denotes any suitable organic group which will form and maintain a covalent bond with the metal "M" following hydrolysis of the alkoxide. In some examples, R and R_{C} may be the same. In other examples, R and R_{C} may be different. Any suitable metal alkoxide may be used. Examples of suitable metal alkoxides include Si(OR)₄, Ti(OR)₄, Al(OR)₃, Zr(OR)₃ and Sn(OR)₄ as well as R_{C}-Si(OR)₃, R_{C}-Ti(OR)₃, R_{C}-Al(OR)₂, R_{C}-Zr(OR)₂ and R_{C}-Sn(OR)₃. In specific examples, R may be the methyl, ethyl, propyl or butyl radical. In some specific examples, R_{C} may be a phenyl group, a cyclopentyl group, or any other suitable organic group capable of maintaining a covalent bond to the metal. The metal of the metal alkoxide may comprise silicon, titanium, aluminium, zirconium, tin, or any other suitable metal. In particular examples, the metal alkoxides may be selected from the group comprising Ti(isopropoxy)₄, Al(isopropoxy)₃, Al(sec-butoxy)₃, Zr(n-butoxy)₄, Zr(n-propoxy)₄, n-propyltriethoxysilane, tetrapropyl orthosilicate, titanium(IV) tert-butoxide, titanium(IV) isopropoxide, triethyloxysilane, methyltriethyloxysilane, triethoxy(octyl)silane, phenyl-triethoxysilane, titanium(iv) ethoxide, triethoxy-silylcyclopentane, (3-glycidyloxypropyl) trimethoxysilane, cyclopentyltriethoxysilane, 3-amino-propyltriethoxysilane, triethoxy-3-(2-imidazolin-1-yl)propylsilane, and any combination thereof. In selected examples, the metal alkoxides may be selected from the group comprising tetraethoxysilane, phenyltriethoxysilane, methyltriethyloxysilane, and any combination thereof. In further selected examples, the metal alkoxides may be selected from the group comprising tetrapropyl orthosilicate, titanium(IV) tert-butoxide, titanium(IV) isopropoxide, triethyloxysilane, methyltriethyloxysilane, triethoxy(octyl)silane, phenyl-triethoxysilane, titanium(iv) ethoxide, triethoxy-silylcyclopentane, (3-glycidyloxypropyl) trimethoxysilane, cyclopentyltriethoxysilane, or any combination thereof. In additional selected examples, the metal alkoxide may be selected from the group comprising Ti(isopropoxy)₄, Al(isopropoxy)₃, Al(sec-butoxy)₃, Zr(n-butoxy)₄, Zr(n-propoxy)₄, and n-propyltriethoxysilane-based alkoxides, and any combination thereof. Suitable catalysts for use in sols include at least one of an acid or a base. Examples of acid catalysts include hydrochloric acid, citric acid, nitric acid and acetic acid. Examples of basic catalysts include sodium hydroxide, potassium hydroxide and ammonia.

A sol may be formed by dispersing a functional material of suitably small particle size in a solvent and adding a catalyst. The functional material may be a particle with at least one dimension in the range of approximately 1 nm to 1 µm. An alternative method of making a sol involves dispersing a functional material in a solution which comprises a catalyst and then adding a biopolymer and/or one or more other functional additives. Where a biopolymer and/or one or more other functional additives are present, a sol comprising a functional material may generally be stored for a period of time, prior to addition of the biopolymer and/or the one or more other functional additives. Additional functional additives may be added at any stage during the method of making the sol. For example, in a sol comprising a biopolymer the additional functional additive may be added before or after the biopolymer has been dispersed in a solution but before the alkoxide has been added, or alternatively, after the biopolymer and alkoxide have been added to the solution. One or more functional additives may be added at different stages of making the sol. The functional additives may be used to adjust the properties of the sol, e.g. to control viscosity, density or rheology of the sols; to make the sol suitable for UV, visible or IR curing; and/or may be used to add additional functionality to a coating prepared using the sol, e.g. colour, pH sensitivity, conductivity, fluorescence. The functional additives used will vary depending on the intended use of the sol. Suitable functional additives include photoinitiators, resins, oils, dyes (including pH sensitive dyes and fluorescent dyes), salts, surfactants, composite particles, mineral or other inorganic particles (including carbonates, carbides, oxides, hydroxides, nitrates, bromides, and the like), and metal particles (including alloys and particles comprising one or more metals and one or more additional non-metal components). The sols may be also formed without the presence of any additives. More particularly, sols may be wholly or substantially free of additives during formation and/or use.

The sols used in the present invention may be used without being modified before use. Thus, the products prepared using sols in accordance with the present invention may be prepared from products and a sol without the sol being modified before use. For example, a water-impermeable product may be prepared from a product and a sol that is substantially free of additives, i.e. the water impermeable product is prepared by applying the sol to a product in the absence of any functional additives. Alternatively, the sols used in the present invention may be modified before use. For example, the sols used in the present invention may be modified by diluting a sol with a solvent, combining a sol with functional additives or both diluting a sol with a solvent and combining a sol with functional additives. Suitable solvents for use in diluting the sol include the solvent used to disperse the alkoxide when forming a sol (sometimes referred to as the sol solvent), other solvents that are miscible with the sol solvent, or combinations thereof. The functional additives may be used to adjust the properties of a sol such as the rheology, density, or viscosity of the sol and/or may be used to add additional functionality to a coating prepared using a sol. The functional additives used will vary depending on the intended use of the sol and suitable functional additives include photoinitiators, resins, salts and fluorescent dyes.

Sols are generally stable by definition. A sol may therefore be formed some time prior to use of the sol. For example, the sol may be formed and stored for a period of up to 1 hour, up to 1 day, up to 1 week, up to 1 year, up to 10 years, or more prior to use of the sol. However, the sol may also be formed immediately prior, less than 2 seconds prior, less than 15 seconds prior, less than 30 seconds prior, less than a minute prior, or less than an hour prior to use of the sol. Use of the sol in such examples may include coating one or more products with the sol or including the sol as part of a material formulation.

The sol may be formed in geographical proximity to the location at which it will be used. Alternatively, the sol may be formed distant from the site at which the sol is to be used and then transported to that site. In an example, the sol may be formed at a manufacturing site in an on-line process a matter of seconds before it is applied to one or more products. In another example, the sol may be formed in an independent manufacturing facility and then transported by road, rail, air, sea, pipeline or equivalent to a geographically distinct site where the sol is applied to one or more products. More generally, sols may be formed distinct from the product to which the sol is to ultimately be applied, where appropriate. In such an example, the sol and the product to which the sol is to be applied will be brought together following formation of the sol. Alternatively, a sol may be formed around a product to which the sol is to be applied such that the formed sol coats the product immediately, substantially immediately, or shortly after formation.

The term 'product' as used herein is intended to include intermediate, work in progress and unfinished products and their components in addition to otherwise finished goods and articles. For example, applying the sol mixture to a product may involve adding the mixture to a paper pulp slurry, wet pulp, air-laid pulp or dry paper pulp prior to formation of paper sheets or three-dimensional moulded shapes therefrom. In this example, the sol is included in the material matrix forming the product and may be therefore be considered as a component additive. Applying the mixture to a product may also involve coating all or a portion of the outer surface of an otherwise finished product with the sol dispersion or suspension. In general, the mixture may be applied to the product by any suitable method, including brushing, spraying, spray drying, rolling, dropping, injecting, transferring, submersion, immersion, mixing, spreading, blading, padding, and the like. Individual or multiple methods of application may be utilised to apply the mixture to a single product or article depending on the nature of the product and the properties and characteristics desired. For example, a sol intended to form an impermeable coating will generally be applied to a product via brushing, spraying, padding, immersion, blading or rolling. Providing a bulk mass for further processing with antimicrobial activity may, in an example, be achieved by mixing the mixture into an intermediate material. An example of a bulk mass that may be used for further processing is an intermediate pulp prior to the use of the intermediate pulp to make paper. Sols may be applied to products that have already been coated with the same sol previously or with another sol, e.g. to impart a thicker functional layer of the same sol or to impart a range of functional benefits when the sol used to form the first coating and the sol used to form the second coating are different. In this manner, the sol may be used to form a primer coating on a product prior to the application of a further one or more coating layers which may or may not also include sols. For example, a sol primer may be used on a paper or cardboard product. Any desired number of different layers of sol coatings may be formed. Where multiple layers of sol coatings are used then all coating layers may comprise one or more sols. Alternatively, one or more layers spaced between or around the different layers of sol coating may be free of sols or substantially free of sols. The products to be coated by sols of the present invention may be formed from any suitable material. More particularly, the product may comprise wooden products, textile products, leather products, metal (including alloy) products, concrete products or construction materials, cardboard products, paper or pulp products, plastic products, glass products, ceramic products, composite materials, electronic circuitry, sands, bricks, marbles, soils, paints, painted products, food and beverage products, medical devices, pharmaceutical products and combinations thereof.

For the avoidance of doubt, the term 'component additive' as used herein refers to the addition of the sol as an additive itself to one or more materials, works in progress, bulk intermediates, solutions, substances, or the like. The term 'component additive' is therefore used distinct from the term 'functional additive' which herein refers to one or more other functional species added to the sol before, during or after formation to impart one or more properties to the sol. For the further avoidance of doubt, a functional additive may be added to a sol prior to that sol being used as a component additive and a sol that does not comprise any functional additives may be used as a component additive.

Without being bound by theory, the functional characteristics imparted to products with which the sols are used may arise due to the formation of a coating with extensive cross-linking between the reactive functional groups of the components which form the sol. Moreover, in some situations, during or following application to a product, a sol may at least partially form a transient nanodispersion, microdispersion or suspension in addition to the formation of a cross-linked coating. The cross-linked coating and/or the transient nanodispersion, microdispersion or suspension may perform a filling function by partially or fully blocking or obstructing otherwise porous or permeable passages on the surface of a product. Therefore, coating a product with a sol may result in a combination of a functional sol coating including discrete functional or reactive particles. The sol mixture may therefore act as coating, filler and binder simultaneously for materials of a porous and/or permeable nature. When the mixture is applied to a product, the sol will cover the surface of the product and will flow into any pores, indents, apertures, or similar features on the surface and the inner layers of the product. The liquid may carry any nano- or micro-disperse suspended material in the sol into the porous and/or permeable material. The sol coating may therefore be used to fill or partially fill the pore volume on the surface of a product. In an example, the sol may be used as part of a paper sizing process. Any sol remaining in the liquid phase when applied to a product will coat the exterior of the product, but may also penetrate further into the product than the solid material. Once the liquid sol component has penetrated the surface of a product, the sol may continue to form a nanodispersion, microdispersion or suspension due to mechanisms such as interaction of the sol with species such as water resident in the internal structure of the product. The sol may thus form solid material in the internal matrix of a product surface and fill or partially fill the void volume in the interior of a product structure. Portions of a product's surface topography and internal structure that may have been otherwise unreached by a solid surface treatment may be reached by the liquid sol upon application. Once settled, the liquid sol coating surfaces may therefore form continuous coating layers with discrete particulates formed prior to or during application when surface accessible pores may have been filled with the liquid sol. Internal void spaces may become filled via further development of the sol post-coating or by the formation of internal coatings in the internal void spaces of a product as the liquid sol dries. In this manner, the sols may coat the surface of a product, fill or partially fill the pore volume with material, and bind material together by forming solids in the internal structure of a surface into which it has permeated. Such binding, filling and coating is not always possible with the sol as some sols will either form a surface coating and/or permeate into the product structure. Some sols will serve to coat only the surface of the product, forming a cross linked coating as described. Other sols may permeate the product surface to form both a surface coating and internal coatings without the formation of a transient nanodispersion, microdispersion or suspension.

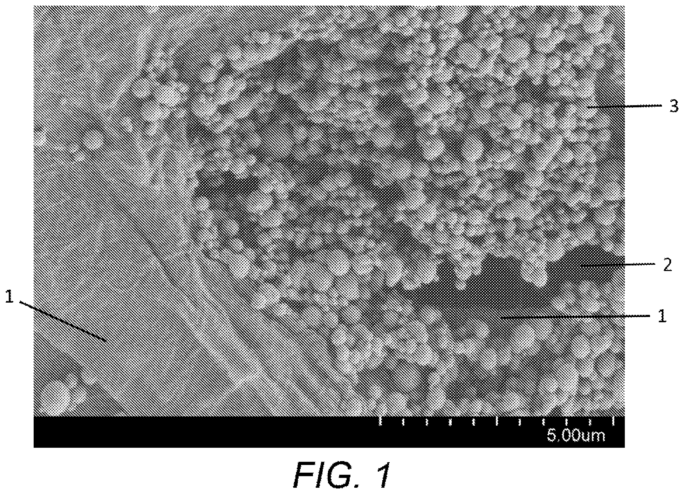

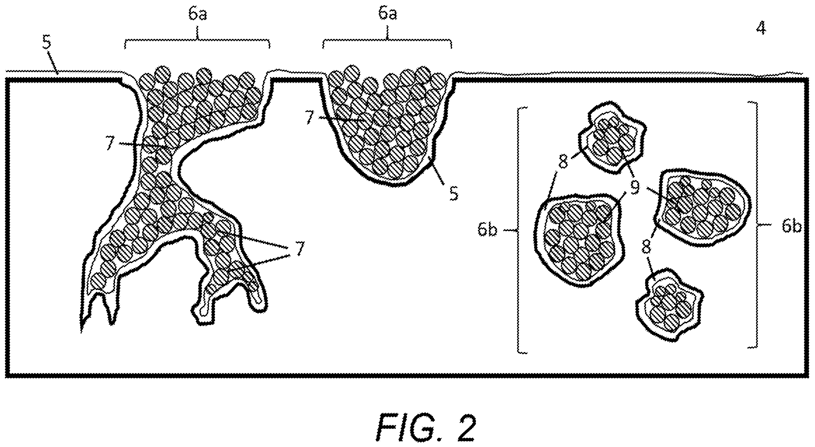

Figure 1 shows a Scanning Electron Microscope (SEM) image of a fibrous product coated using the methods described herein. The SEM image shows areas where a continuous cross-linked coating 1 has been formed where the sol has been dried. A surface accessible pore 2 which has been filled with a combination of cross-linked coating and particulates 3 formed during formation of a transient nanodispersion, microdispersion or suspension. Figure 2 shows a schematic representation of a coated material. In Figure 2, a product 4 has been coated with a sol, forming coating layer 5 over the outer surface of the product 4 and its exposed surface pores 6a. Solid material arising from the formation of a transient nanodispersion, microdispersion or suspension 7 has further filled the accessible pore spaces on the surface of the product. Where the sol has permeated into the internal product structure, internal coatings 8 and further particulates 9 in the internal void spaces 6b have formed. The sol therefore performs the function of a coating 5, a filler 7, and a binder 8, 9 in the particular example of Figure 2.

Sols of the present invention include one or more biopolymers. The one or more biopolymers may include one or more polysaccharides. For example, the biopolymer may comprise starch-based polymer, hemi-cellulose-based polymer, cellulose-based polymer, lignin-based polymer, chitosan-based polymer, any other suitable biopolymer or modified biopolymer, and any combination thereof. The sol may additionally, or alternatively, comprise one or more flours derived from natural materials. Suitable flours may include oat flour, barley flour, rye flour, wheat flour, rice flour, bamboo flour, lentil flour, chickpea flour, pea flour, corn flour, or any combination thereof. The use of a biopolymer in the sols of the present invention may act as a natural surfactant forming networks with negatively charged species such as alkoxides.

Starches suitable for use in the present invention include positively charged plant-derived starches or the synthetic and derivative equivalents thereof such as cationic starch. Other starches such as anionic or neutral starches may also be used depending on the desired properties of the sol. In some examples, starches and other polysaccharides may be combined in a single sol, which may help optimise the functionalities of the sol. Cationic starch suitable for use in the present invention includes primary, secondary, tertiary and quaternary cationic starch. Quaternary ammonium type starch is cationic in both high pH and low pH solutions, whereas primary, secondary and tertiary ammonium type starch is only cationic in low pH solutions. Hence different types of cationic starch may be suited to different applications. Sols that include one or more starches or cationic starches may be water-impermeable and/or oil-impermeable and/or vapour-impermeable and/or gas-impermeable and/or anti-microbial and/or hydrophobic and/or oleophobic and/or anti-fouling and/or anti-biofouling and/or stain resistant and/or antireflective. In particular, quaternary ammonium type starch has been found to be particular effective at imparting anti-microbial properties to the sol. In general terms, anti-microbial sols may be anti-bacterial and/or anti-fungal and/or anti-viral and/or anti-algae and/or anti-parasitic. Sols including starches have also been shown to be effective in preventing the growth of *Staphylococcus aureus, Pseudomonas aeruginosa, Escherichia coli* and *Enterococcus hirae.*

Flours suitable for use in the present invention include positively or negatively charged plant-derived flours or the synthetic and derivative equivalents thereof. Other flours such as neutral flours may also be used depending on the desired properties of the sol. Different flours may be combined in a single sol, which may help optimise the functionalities of the sol. Additionally, or alternatively, the flour may be combined with one or more additional polysaccharides depending upon the desired properties and functionality of the sol. In general, plant derived flours are the powdered form of plant material such as wheat. Flours comprise a range of constituent ingredients including proteins, fats, sugars, starches, amino acids, vitamins and trace elements. The composition of a flour depends upon the composition of the material from which it was sourced. For example, an oat flour may contain a greater proportion of cellulose than a wheat flour. Example compositions of various plant flours that may be used in sols of the present invention are provided in Table 1. The flour used in the present invention may be selected from oat flour, barley flour, rye flour, wheat flour, buckwheat flour, rice flour, bamboo flour, lentil flour, chickpea flour, green pea flour, corn flour, and combinations thereof. Other plant-derived flours including starch, hemi-cellulose, cellulose, lignin or other polysaccharides may also be used.

**Table 1 Example compositions of flours derived from various plant materials**

| | Starch (wt%) | Hemi-cellulose (wt%) | Cellulose (wt%) | Lignin (wt%) | Protein (wt%) | Ash (wt%) |
|---|---|---|---|---|---|---|
| Oat | 45-50 | 10-15 | 5-10 | 2-7 | 10-15 | 0-5 |
| Barley | 50-60 | 8-12 | 0-5 | 0-5 | 10-15 | 0-5 |
| Rye | 60-65 | 8-12 | 0-5 | 0-5 | 10-15 | 0-5 |
| Wheat | 65-70 | 6-10 | 0-5 | 0-5 | 10-15 | 0-5 |
| Rice | 60-80 | 10-15 | 5-10 | 2-7 | 5-10 | 5-25 |
| Bamboo | 5-15 | 20-30 | 40-50 | 15-25 | 0-5 | 0-5 |
| Lentil | 5-50 | 0-5 | 0-5 | 0-5 | 20-30 | 0-5 |
| Chickpea | 20-30 | 0-5 | 0-8 | 0-5 | 15-35 | 0-5 |
| Green pea | 22-45 | 0-10 | 0-10 | 0-10 | 10-25 | 0-5 |
| Corn | 65-85 | 0-10 | 0-5 | 0-5 | 5-15 | 0-5 |

In general, plant-derived flours that may be used in the sols of the present invention may comprise 5 to 85 wt% starch, optionally in combination with 0 to 30 wt% hemi-cellulose, 0 to 50 wt% cellulose, 0 to 25 wt% lignin, 0 to 35 wt% protein and 0 to 25 wt% ash. Other suitable flours may comprise 20 to 80 wt% starch, optionally in combination with 5 to 30 wt% hemi-cellulose, 0 to 50 wt% cellulose, 0 to 25 wt% lignin, 0 to 35 wt% protein and 0 to 25 wt% ash. Yet other suitable flours may comprise 45 to 80 wt% starch, optionally in combination with 5 to 30 wt% hemi-cellulose, 0 to 50 wt% cellulose, 0 to 25 wt% lignin, 0 to 35 wt% protein and 0 to 25 wt% ash. A further flour that may be suitable for the sols of the present invention may comprise 45 to 70 wt% starch, optionally in combination with 5 to 15 wt% hemi-cellulose, 0 to 10 wt% cellulose, 0 to 7 wt% lignin, 10 to 15 wt% protein and 0 to 5 wt% ash. In other examples, a suitable flour may comprise 20 to 70 wt% starch, optionally in combination with 0 to 15 wt% hemi-cellulose, 0 to 10 wt% cellulose, 0 to 10 wt% lignin, 5 to 35 wt% protein and 0 to 25 wt% ash. Additionally, or alternatively, a suitable flour may comprise 45 to 70 wt% starch, optionally in combination with 5 to 15 wt% hemi-cellulose, 0 to 10 wt% cellulose, 0 to 10 wt% lignin, 5 to 15 wt% protein and 0 to 10 wt% ash. Still further a flour that may be suitable for the sols of the present invention may comprise 45 to 85 wt% starch, optionally in combination with 0 to 15 wt% hemi-cellulose, 0 to 10 wt% cellulose, 0 to 10 wt% lignin, 0 to 15 wt% protein and 0 to 10 wt% ash.

Sols that include one or more flours may be water-impermeable, oil-impermeable, and/or vapour-impermeable and/or gas impermeable and/or hydrophobic and/or thermally resilient and/or optically transparent and/or oleophobic and/or anti-fouling and/or stain resistant and/or antireflective. In particular, it has been found that coatings formed from sols which include one or more flours exhibit flexibility and durability in use. For example, the coating formed from a sol including one or more flours maintains an impermeable and/or otherwise functional barrier even when the surface upon which the coatings are formed is deformed, bent or subjected to mechanical or thermal stresses. The coatings formed by the sols including one or more flours have also been shown to be thermally tolerant. For example, heating a coating formed from a sol including flour in excess of 200 °C provides no demonstrable deterioration in the impermeability of the coating. Moreover, the coatings formed from a sol including one or more flours may impart mechanical and/or thermal resilience to other coatings placed thereupon. In examples where multiple sol coatings are to be applied to a single product, a flour-based sol may operate as a functional primer. In such an example, application of a flour-based sol on to a product has been demonstrated to improve the tolerance to cracking or stress failure of sol coatings placed onto the coating formed from the flour-based sol. Other sol coatings placed upon flour-based sols have been shown to possess improved tolerance to elevated temperatures or where the surface upon which the coating is applied has been deformed.

Functional or multifunctional powders may be derived from the sols described herein. Suitable methods for deriving the powders include allowing the sols to dry at room temperature then grinding the dry product to form a powder, heating the sol to form a dry product then grinding the dry product to obtain a powder, centrifugation of the sols to obtain a powder by sedimentation, other methods of combined mixing, shaking and separation, sonication of the sols to obtain uniform sized powder particles, or combinations of such methods.

The powders may have one or more functional characteristics of a coating that would otherwise be formed from the sol. As such, the powders may be anti-microbial and/or hydrophobic and/or oleophobic and/or anti-fouling and/or anti-biofouling and/or stain resistant and/or adhesion promoting and/or antireflective, and/or any other property provided by the sol from which the powder is formed. In general terms, anti-microbial powders may be anti-bacterial, anti-fungal, anti-viral, anti-algal and/or anti-parasitic.

The powder may be reconstituted as a sol by the addition of a suitable solvent. The reconstituted sol may then be used in the manner described herein in respect of the sols of the present invention. The powders may be stored without loss of functionality for periods of greater than 2 years, periods greater than 18 months, periods greater than 12 months, periods greater than 6 months, periods greater than 1 month, periods greater than 2 weeks and periods greater than 1 week without significant degradation or loss in functionality. Provision of the dried powdered sol may impart various benefits to the end user including reduced transportation costs, reduced storage volume and improved long term stability.

The powders may be used as a multifunctional component additive in the manufacture of products comprising wood, textiles, leather, metal (including alloys), concrete, cardboard, paper, plastic, bioplastic, glass, ceramics, sand, brick, electronic circuitry, fillers, marble, paints, pigments, adhesives, pastes and combinations thereof, wherein combinations thereof includes composite products and biocomposite products. Such products may be in the form of molecules (such as sol-gel encapsulated small molecules for drug delivery), thin films, particles, fibres, sheets, pastes, liquids and combinations thereof. In addition, the powders may be used to form nanoparticles which may be suspended in a solvent to provide a nanoparticulate multifunctional coating suspension. For the avoidance of doubt, the sols of the present invention may also be utilised as component additives when in fluid form, where appropriate. In an example, a liquid or powdered sol optionally including one or more functional additives may be added as a component additive to a material or process feedstock which is subsequently used to form a film or biofilm on one or more products. In this example, the sol or powdered sol may impart water impermeability or other characteristics that would normally be achieved via the inclusion of synthetic polymers such as plastics, microplastics, or natural polymers modified with synthetic chemical functionality in the material or process feedstock. Consequently, the sol may be used to form a water impermeable film or biofilm that is substantially free of plastics or microplastics. In other examples, the liquid or powdered sol may be used as a component additive in a plastic or bioplastic to impart a desired functionality to the plastic or bioplastic matrix while reducing the quantity of hydrocarbonaceous material required to form a given volume of plastic or bioplastic.

The sols of the present invention, and powders formed from the sols of the present invention, may be used in various applications to provide one or more functions in said applications. The sols may be used in the manufacture of products used in a range of industries such as the automotive, engineering, construction, aviation, marine, defence, electronics (including photo-electronics and sensors), energy (including batteries, energy storage and renewable energy), photonics, food, medical, household products, paper, adhesives, interior or exterior decoration, home improvement, additive manufacturing, oil and gas, separation and purification, fashion, and cosmetics industries. The sols may be used in the preparation of products comprising materials such as wood, textiles, leather, metal (including alloy), concrete, cardboard, paper, plastic, bioplastic, glass, ceramics, sand, brick, electronic circuitry, marble, soil, painted surfaces and combinations thereof, wherein combinations thereof includes composite products and biocomposite products. The sols of the present invention may be added to existing compositions such that the existing compositions benefit from the functionality of the sols. For example, the sols of the present invention may be added to an existing composition to provide an anti-microbial composition and/or a hydrophobic composition and/or an oleophobic composition and/or an anti-fouling composition and/or an anti-biofouling composition and/or a stain resistant composition and/or an adhesion promoting and/or antireflective composition. The sols of the present invention may therefore be used as a component additive in a coating formulation. For example, sols or powders formed from sols may be added to one or more coating formulations to impart one or more properties to a coating formed from the coating composition to which the sol or powder of a sol has been added. Sols or powders formed from sols may therefore alter the water-impermeability, oil-impermeability, and/or vapour-impermeability and/or gas impermeability and/or hydrophobicity and/or thermal resilience and/or optically transparency and/or oleophobicity and/or anti-fouling properties and/or stain resistance and/or anti reflectivity and/or wear resistance and/or adhesive properties of a coating. The coating to which the sol or powder formed from a sol is added may be used to coat a product which is already coated. In an example, a product may be coated with a sol prior to being coated with a further coating comprising one or more sols or powders formed from sols as a component additive.

When the sol is used to form a coated product, the product may be in the form of one or more particles, fibres, moulded products (including regular and irregular shaped moulded products), sheets, molecules (such as sol-gel encapsulated small molecules for drug delivery) and combinations thereof. Products coated with the sol may be permeable or porous prior to coating with the sol. Alternatively, products coated with the sol may be impermeable or non-porous prior to coating with the sol. An example of a non-porous and impermeable product may be a metal or glass sheet. The coated products may form part of a secondary product or be used in the manufacture of a secondary product, i.e. secondary products may comprise coated products according to the present invention, such that the secondary products benefit from the functionality of the sol. For example, the coated products may comprise particles or fibres that are used in the manufacture of a composite product, which composite product may be anti-microbial and/or hydrophobic and/or oleophobic and/or anti-fouling and/or anti-biofouling and/or stain resistant and/or antireflective. The coated products may also help promote adhesion and/or add strength to a composite product or biocomposite product. Specific examples of coated products or secondary products comprising coated products include packaging (such as food and drink packaging, medical packaging, cosmetics packaging, batteries packaging and electronic device packaging), medical devices, fluid receptacles, culinary utensils and accessories, fibre-based products, or any product that may benefit from an impermeable, anti-microbial or other functional coating.

The invention will now be described in further detail with reference to some particular examples in which the sols described herein are used to impart one or more characteristics to a fibrous product. A fibrous product is one composed of fibres, strands, threads, strips, or any other similar structure. For example, a fibrous product prepared using one or more sols described herein may comprise pulp (pulp slurry, wet pulp, air-laid pulp, dry pulp), paper, cardboard, board, textiles, clothing, woven materials or combinations thereof including composite fibre-based products and biocomposite fibre-based products. In particular, fibrous products including or coated with a sol of the present invention may be used as primary, secondary or tertiary packaging for use in the food and beverages, electronics (including photo-electronics and sensors), engineering, appliances, cosmetics, medical devices, pharmaceuticals, fashion, cosmetics, personal care, household products (such as coat hangers or paper bins), interior or exterior decoration, home improvement, automotive, aviation, marine, defence or construction industries. Such packaging is well suited for use in the form of a container for use in the food and beverages industry since the hydrophobic and/or oleophobic and/or stain resistant properties imparted by the use of the sol enables the formation of a robust container capable of containing liquids without leaking.

The sols to be used with a fibre-based product may be formed at the same time as a fibre-based product. For example, the sol is applied to a fibre-based product during formation of the fibre-based product such that the functionality of the sol, such as water impermeability, is provided to the fibre-based product during preparation in a single step. In such an example, the sol is applied to the fibre-based product as the fibre-based product is formed and as the sol is formed. Alternatively, the sols used in the present invention may be formed distinct from a fibre-based product then applied to a fibre-based product following formation of the sol such that a sol-treated product is prepared. In such an example, the sol is applied to the fibre-based product following formation of the sol. The pre-formed sol may be applied during formation of the fibre-based product such that a water impermeable fibre-based product is prepared in two steps (a sol formation step then a combined fibre-based product formation and sol application step) or following formation of the fibre-based product such that a water impermeable fibre-based product is prepared in three steps (a sol formation step then a fibre-based product formation step then a sol application step). The pre-formed sol may be applied during formation of pulp slurry, air-laid pulp, dry pulp, paper, cardboard, board, composite fibre-based products, biocomposite fibre-based products or combinations thereof. The pre-formed sol may be applied following formation of pulp slurry, air-laid pulp, wet pulp, dry pulp, paper, cardboard, board, composite fibre-based products, biocomposite fibre-based products or combinations thereof. It will be appreciated that where a sol is used to impart water impermeability to a fibrous product that water impermeable paper, cardboard, board, composite products or biocomposite products may be formed from water impermeable pulp slurry, air-laid pulp or dry pulp formed in a single step, in two steps or in three steps. Furthermore, use of a sol in accordance with the invention enables the preparation of water impermeable paper, cardboard, board, composite products or biocomposite products that may commonly require the use of a binder in combination with another material to form. Hence, a water impermeable fibre-based product may be formed in the absence of the binders that are normally required in their formation. For example, the use of a sol with pulp slurry, air-laid pulp or dry pulp in accordance with the present invention may allow for the formation of water impermeable cardboard or paper without additional binders.

The sols used in accordance with the present invention may be applied to a fibre-based product by spraying the sol onto the product, soaking the product in the sol, dipping the product in the sol, roller coating the sol onto the product, brushing the sol onto the product, wiping the sol onto the product, impregnating the product with the sol by padding, exhausting the sol on the product, flowing the sol onto the product, the use of slit coating techniques, mixing the sol or a powder obtained from the sol into a fibre mixture, and combinations thereof. When the sol is applied to the surface of a fibre-based product, the sol may be applied to the whole of a surface of a fibre-based product or only a portion of a surface of a fibre-based product.

The sols of the present invention may be applied to a product such as a fibre-based product to form a base coating onto which further coatings can be applied. Alternatively, the sol may be applied to a product to form a coating over an existing coating. For example, the sol may be applied to a fibre-based product to form a top coating over an existing base coating. The coating or top coating formed by application of the sol may be optically transparent and/or gas impermeable and/or hydrophobic and/or oleophobic and/or stain resistant and/or antireflective.

In some other specific examples, sols may be used to coat electronic circuitry such as printed circuit boards (PCBs) to form a water impermeable barrier that prevents water or other fluids from damaging the PCB. Sols may impart other benefits to PCBs such as protection from harmful chemicals, resistance to abrasion, or improvements in properties such as dielectric properties. Sols may be applied to PCBs using the methods described herein. In another example, sols may be used to coat metal surfaces to protect the metal surface from corrosion or to prevent the reflection of light from the coated metal surface.

### EXAMPLES

The invention may be further understood in consideration of the following examples. All chemicals were used as received without further purification.

Examples 1 to 18 provide various methods by which sols may be formed.

### Example 1 Formation of a sol:

Tetraethyloxysilane (100%, 5.5 ml) was added dropwise to a mixture of ethanol (7 ml) and aqueous HCl (0.1 M, 1.7 ml). The solution was stirred for approximately 40 hours until formation of a sol.

### Example 2 Formation of a sol:

Titanium (IV) Ethoxide (100%, 5.5 ml) was added dropwise to a mixture of ethanol (7 ml) and aqueous HCl (0.1 M, 1.7 ml). The solution was stirred for approximately 2 hours until formation of a sol.

### Example 3 Formation of a sol:

Methyltriethyloxysilane (100%, 7.5 ml) was added dropwise to a mixture of ethanol (15 ml) and aqueous HCl (0.1 M, 2 ml). The solution was stirred for approximately 1 hour until formation of a sol.

### Example 4 Formation of a sol:

Titanium isopropoxide (9 g) was added to a mixture of ethanol (6.5 ml) and aqueous HCl (0.1 M, 1.8 ml). The mixture was stirred for approximately 30 minutes until formation of a sol.

### Example 5 Formation of a sol:

Zirconium isopropoxide (8.5 g) was added to a mixture of ethanol (6.3 ml) and aqueous HCl (0.1 M, 1.6 ml). The mixture was stirred for approximately 1 hour until formation of a sol.

### Example 6 Formation of a sol:

Methyltriethyloxysilane (100%, 5.8 ml) was added dropwise to a mixture of ethanol (6.2 ml) and aqueous NaOH (0.1 M, 1.5 ml). The solution was stirred for approximately 30 minutes until formation of a sol.

### Example 7 Formation of a sol:

Aluminium isopropoxide (9.2 g) was added to a mixture of ethanol (6.5 ml) and aqueous HCl (0.1 M, 1.6 ml). The mixture was stirred for approximately 1 hour until formation of a sol.

### Example 8 Formation of a sol:

A silicon alkoxide precursor mixture (5 ml) composed of 50% tetraethyloxysilane and 50% methyltriethyloxysilane was added dropwise to a mixture of ethanol (10 ml) and aqueous NaOH (0.1 M, 2 ml). The solution was stirred for approximately 30 minutes until formation of a sol.

### Example 9 Formation of a sol:

Solution A- Titanium (IV) Ethoxide (5 ml) was added dropwise to ethanol (10 ml). Solution B- 5 ml of solution A added to a silicon alkoxide precursor mixture (5.2 ml) composed of 50% tetraethyloxysilane and 50% phenyltriethoxysilane. The mixture was added dropwise to a mixture of ethanol (8.2 ml) and aqueous HCl (0.1 M, 1.8 ml). The solution was stirred at room temperature for approximately 1 hour until formation of a sol.

### Example 10 Formation of a sol:

A silicon alkoxide precursor mixture (5.2 ml) composed of 50% tetraethoxysilane and 50% phenyltriethoxysilane were added dropwise to a mixture of ethanol (10 ml) and aqueous HCl (0.1 M, 2 ml). The solution was stirred at room temperature for approximately 6 hours until formation of a sol.

### Example 11 Formation of a sol:

Cationic Starch (CS; 7 mg) was dispersed in a mixture of ethanol (10 ml) and aqueous HCl (0.1 M, 1.6 ml) to produce a solution with pH 2. To this stirred solution, silicon alkoxide precursor (5.2 ml) composed of 100% tetraethyloxysilane was added dropwise before stirring was continued for a further 8 hours.

### Example 12 Formation of a sol:

Cationic Starch (CS; 7 mg) was dispersed in a mixture of ethanol (10 ml) and aqueous HCl (0.1 M, 1.6 ml) to produce a solution with pH 2. To this stirred solution, silicon alkoxide precursor (5.2 ml) composed of 100% methyltriethyloxysilane was added dropwise before stirring was continued for a further 2 hours.

### Example 13 Formation of a sol:

Chitosan (6 mg) was dispersed in a mixture of ethanol (12 ml) and aqueous HCl (0.1 M, 2 ml) to produce a solution with pH 2. To this stirred solution, silicon alkoxide precursor mixtures (6 ml) composed of 50% tetraethoxysilane and 50% phenyltriethoxysilane were added dropwise before stirring was continued for a further 1.5 hours.

### Example 14 Formation of a sol:

Wheat flour (7 mg) was dispersed in a mixture of ethanol (8 ml) and aqueous NaOH (0.1 M, 2 ml) to produce a solution with pH 13. To this stirred solution, silicon alkoxide precursor mixtures (5.2 ml) composed of 50% tetraethyloxysilane and 50% methyltriethyloxysilane were added dropwise before stirring was continued for a further 30 minutes.

### Example 15 Formation of a sol:

Cationic Starch (CS; 5 mg) was dispersed in a mixture of ethanol (10 ml) and aqueous NaOH (0.1 M, 1.5 ml) to produce a solution with pH 13. To this stirred solution, methyltriethyloxysilane (5.2 ml) was added dropwise before stirring was continued for a further 20 minutes.

### Example 16 Formation of a sol:

Wheat flour (5 mg) was dispersed in a mixture of ethanol (6 ml), aqueous NaOH (0.1 M, 1 ml) and methyltriethoxysilane (1 ml) to produce a solution with pH 13. To this stirred solution, silicon alkoxide mixtures (1 ml) composed of 50% tetraethoxysilane and 50% phenyl-triethoxysilane were added dropwise before stirring was continued for a further 30 minutes.

### Example 17 Formation of a sol:

Cationic Starch (CS; 5 mg) was dispersed in a mixture of ethanol (7.6 ml) and aqueous HCl (0.1 M, 1.6 ml) to produce a solution with pH 2. To this stirred solution, silicon alkoxide precursor mixtures (5.2 ml) composed of 50% tetraethyloxysilane and 50% phenyltriethoxysilane were added dropwise before stirring was continued for a further 1 hour.

### Example 18 Formation of a sol:

Wheat flour (5 mg) was dispersed in a mixture of ethanol (6 ml), aqueous NaOH (0.1 M, 1 ml) and methyltriethoxysilane (1 ml) to produce a solution with pH 13. To this stirred solution, triethyloxysilane (1 ml) was added dropwise before stirring was continued for a further 1 hour.

### Example 19 Formation of a sol:

Wheat flour (5 mg) was dispersed in a mixture of ethanol (6 ml), aqueous NaOH (0.1 M, 1 ml) and methyltriethoxysilane (1 ml) to produce a solution with pH 13. To this stirred solution, silicon alkoxide mixtures (1 ml) composed of 50% tetraethyloxysilane and 50% phenyl-triethoxysilane were added dropwise before stirring was continued for a further 1 hour.

Examples 20 and 21 demonstrate methods by which a powder may be formed from a sol.

### Example 20 Formation of a powder:

Cationic Starch (CS; 5 mg) was dispersed in a mixture of ethanol (7.2 ml) and aqueous NaOH (0.1 M, 1.6 ml) to produce a solution with pH 13. To this stirred solution, silicon alkoxide precursor mixtures (5.2 ml) composed of 50% tetraethyloxysilane and 50% methyltriethyloxysilane were added dropwise before stirring was continued for a further 1 hour. The solution is then centrifuged for 5 minutes and left to dry at room temperature to obtain white powder.

### Example 21 Formation of a powder:

Cationic Starch (CS; 5 mg) was dispersed in a mixture of ethanol (7.2 ml) and aqueous NaOH (0.1 M, 1.6 ml) to produce a solution with pH 13. To this stirred solution, methyltriethyloxysilane (5.2 ml) was added dropwise before stirring was continued for a further 1 hour. The solution is then centrifuged for 5 minutes and left to dry at room temperature to obtain white powder.

Examples 22 to 43 provide examples of how sols may be applied to various products or used to impart one or more functional characteristics to various materials.

### Example 22 Coated Chipboard:

A piece of chipboard was coated in the sol produced in Example 17 by manually dipping it in the sol for 2 minutes and leaving it to dry at 40 °C for 1 hour. The coated sample was left to settle at room temperature for three weeks. The coated sample was then left outside during winter for one month alongside an uncoated piece of chipboard. The two samples were moved indoors and left to dry at room temperature for 3 weeks before visually comparing the two samples. The uncoated piece of chipboard had swelled to a larger size than the coated piece due to water adsorption, which also resulted in increased porosity. Fungi had also developed on the uncoated piece of chipboard but not the coated piece of chipboard.

### Example 23 Coated Paper:

A sheet of A4 paper was coated in the sol produced in Example 17 by spraying the sol onto the paper and drying the paper for 30 minutes at 40 °C. The coated paper was stored at room temperature for 3 weeks then tested for water impermeability with both hot (recently boiled, estimated temperature 90 °C) and cold (estimated temperature 20 °C) water. The coated paper was impermeable to both hot and cold water and no water passed through the coated paper.

### Example 24 Coated Aluminium:

A piece of aluminium was coated with a primer prior to coating with the sol produced in Example 17. The coated aluminium and an uncoated reference strip of aluminium were subjected to antibacterial activity testing against *Staphylococcus aureus* and *Escherichia coli* in accordance with the methodology of ISO22196:2011. The antibacterial testing was performed by a commercial laboratory in the Eurofins group^{®}. Testing demonstrated a Log Reduction of 1,31 for *Escherichia coli* and 1,12 for *Staphylococcus aureus* when comparing experimental data for the coated and uncoated aluminium samples.

### Example 25 Coated Cup:

A permeable paper cup was coated in a sol produced in Example 15. Dairy ice cream was placed into the coated container and allowed to partially melt at room temperature. The exterior of the coated container was inspected for signs of permeation or leakage and none was observed. The coated container and ice cream were then placed in a freezer at approximately -18 °C for 3 days and subsequently removed and placed in a room temperature environment overnight to allow the ice cream to melt. The exterior of the coated container was again inspected for signs of permeation or leakage and none was observed. The coated paper cup and ice cream were returned to the freezer and removed as described one further time. Once complete, the ice cream was discarded and the coated paper cup was examined for evidence of permeation of fluid into the paper base. No permeation of fluid into the paper was observed.

### Example 26 Coated Bowl:

A bowl formed from virgin pulp fibre was coated in the sol produced in Example 12. Instant noodles were placed into the coated bowl and 300 ml boiling water (estimated temperature 90 °C) was added. The noodles and water were stirred and the bowl was placed in a microwave for 2 minutes in an 850 W microwave oven. The bowl and contents were removed from the microwave and the contents stirred an additional time. After allowing the bowl and contents to cool to room temperature, the bowl was inspected for signs of permeation of fluid into the pulp fibre. No permeation or leakage was observed.

### Example 27 Coated Bowl:

A bowl formed from virgin pulp fibre was coated in the sol produced in Example 12. The coated bowl was placed in an oven at 220 °C for 30 minutes before being removed and allowed to cool to room temperature. 2.5 g of instant coffee mixture was added to the bowl followed by 250 ml of boiling water (estimated temperature 90 °C). The coffee was allowed to rest in the bowl for 30 minutes, after which it was discarded and the bowl was inspected for evidence of permeation of coffee into the pulp or other leakage. No permeation or leakage was detected.

2.5 g of instant coffee and 250 ml of boiling water (estimated temperature 90 °C) were placed into a disposable coffee cup and allowed to rest for 30 minutes. The coffee was then discarded and the disposable coffee cup interior and coated pulp bowl were each assessed for severity of staining. The coated pulp bowl exhibited approximately 50% reduced severity of staining when compared to the disposable coffee cup.

### Example 28 Adhesive:

The sol of Example 17 was prepared and then added and mixed with a polyvinyl acetate adhesive on a 5% by weight basis as an additive. The tackiness and adhesive capability of the resulting adhesive was measured against the adhesive without the sol. The adhesive containing the sol additive demonstrated increased adhesive capability when compared to the adhesive without the sol.

The adhesives described above were further assessed to determine their solubility in water. The adhesive without the sol dissolved in water whereas the adhesive containing the sol additive did not dissolve in water after being submerged for 30 minutes.

### Example 29 Coated Bronze:

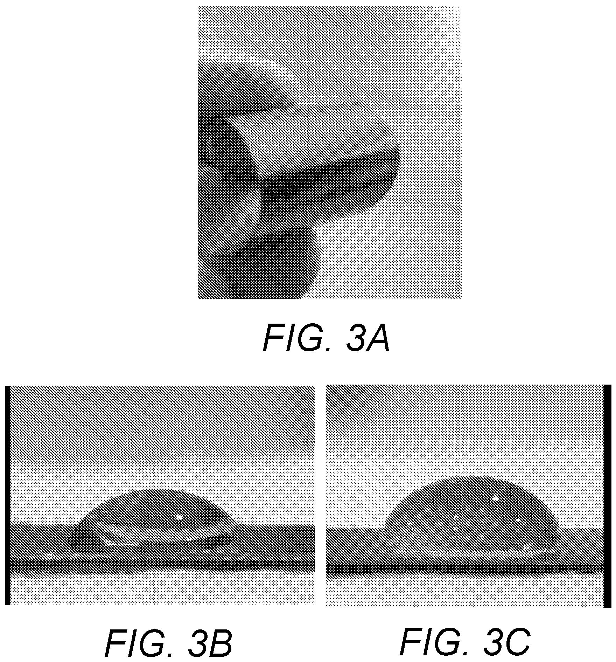

A sheet of phosphor bronze was coated by manually dipping it in the sol produced in Example 18 for 1 minute and leaving it to dry for 5 minutes at room temperature then for 20 minutes at 60 °C. A functional coating was then applied to the sol coating and dried at 60 °C. The coated sample was then allowed to settle for a period of three weeks. The coated bronze sheet was then heated to 200 °C for 1 hour. After the bronze sheet had cooled, it was flexed to check the coating did not crack as shown in Figure 3A and tested for hydrophobicity by dropping water onto coated and uncoated areas of the bronze sheet and visually inspecting the droplets formed as shown in Figures 3B and 3C. The water droplet on the uncoated area of the bronze shown in Figure 3B had a low contact angle indicative of good wetting/poor hydrophobicity whereas the water droplet on the coated area of the bronze shown in Figure 3C had a higher contact angle indicative of incomplete wetting/good hydrophobicity.

A further sheet of phosphor bronze was coated in the functional coating alone and was dried at 60 °C. The further bronze sheet was then heated to 200 °C for 1 hour. After the further bronze sheet had cooled, it was flexed to check whether the coating would crack. The coating of the further bronze sheet (without the application of the sol produced in Example 18) demonstrated cracking across the surface.

### Example 30 Coated Paper:

A sheet of A4 paper was coated in the sol produced in Example 18 by spraying the sol onto the paper and drying the paper for 30 minutes at 40 °C. The coated paper was stored at room temperature for 1 week then tested for water impermeability with both hot (recently boiled, estimated temperature 90 °C) and cold (estimated temperature 20 °C) water. The coated paper was impermeable to both hot and cold water and no water passed through the coated paper.

### Example 31 Coated Aluminium:

A flat piece of aluminium was coated with the sol produced in Example 18. The sol-coated aluminium was left to dry for 5 minutes at room temperature then for 20 minutes at 60 °C. A functional coating was then applied to the sol-coated aluminium and to an uncoated reference sample of aluminium and both samples were allowed to settle at room temperature for a period of three weeks. The aluminium samples were flexed and inspected for cracking or damage to the coating. Neither sample demonstrated any visible defects. Both samples were then heated to 250 °C in an oven for 30 minutes. After removal from the oven, both samples were again flexed and the coatings again assessed for cracking. No cracking or damage to the coating was observed on the sample comprising the sol-coating. Cracking and loss of functionality across substantially the entirety of the surface was observed on the reference coating without the sol-coating.

### Example 32 Coated Cup:

A permeable paper cup was coated in the sol of Example 14. Dairy ice cream was placed into the coated container and allowed to partially melt at room temperature. The exterior of the coated container was inspected for signs of permeation or leakage and none was observed. The coated container and ice cream were then placed in a freezer at approximately -18 °C for 3 days and subsequently removed and placed in a room temperature environment overnight to allow the ice cream to melt. The exterior of the coated container was again inspected for signs of permeation or leakage and none was observed. The coated paper cup and ice cream were returned to the freezer and removed as described one further time. Once complete, the ice cream was discarded and the coated paper cup was examined for evidence of permeation of fluid into the paper base. No permeation of fluid into the paper was observed.

### Example 33 Coated Pulp Fibre:

Two plant pots formed from permeable coarse virgin pulp fibre were coated in the sol of Example 16. 300 ml boiling water (estimated temperature 90 °C) was added to the first pot and 300 ml of cold water (estimated temperature 7 °C) was added to the second. The water was allowed to rest in the coated pots for a period of 2 hours. The pot and water were inspected for signs of permeation of fluid into the pulp fibre. No permeation or leakage was observed.

### Example 34 Coated Fabric:

A fabric household window blind was coated with the sol of Example 19. A cup of hot coffee (estimated temperature 75 °C) was poured onto the coated blind and was allowed to rest for 5 minutes. Some coffee flowed across the blind surface and off of the blind. Visual observation showed small drops of coffee residual on the blind surface within pits in the blind's surface. The blind surface was then washed with water and all coffee remaining on the surface of the blind was then removed. The blind surface was inspected for signs of staining or fouling. No staining or fouling of the blind material had occurred. Moreover, no coffee or water was observed to flow through the blind material during the experiment.

The experiment was repeated with an identical but uncoated fabric blind. The blind absorbed part of the coffee and coffee was observed to pass through the uncoated blind. Following washing with water, extensive staining of the fabric was observed when the coffee residual on the surface of the blind was removed.

### Example 35 Coated Cup:

The sol of Example 10 was brushed onto the internal surface of a cardboard cup. The mixture was allowed to dry on the surface of the cardboard cup.

25 ml of water was added to each of the coated cardboard cup and a control cardboard cup with no coating. Water was seen to immediately soak through the uncoated cardboard cup and leak out into the surrounding area. The 25 ml of water in the coated cardboard cup was retained without observable leakage for in excess of 1 hour at which point observation was stopped.

### Example 36 Coated Plant Pot:

The sol of Example 12 was diluted with 75 ml of water. The mixture was then sprayed onto the exposed surfaces of a permeable pulp plant pot within 10 minutes of dilution with water. The mixture was allowed to dry on the surface of the plant pot.

50 ml of dairy ice cream was added to each of the coated plant pot and a control plant pot with no coating and allowed to melt over the course of 2 hours. Liquid was observed permeating through the uncoated plant pot after approximately 30 minutes which became progressively more pronounced over the following hour. No permeation or leakage was observed in the coated plant pot during this period at which point observation was stopped.

### Example 37 Coated Wood:

The sol of Example 13 was rolled onto the exposed surfaces of a wooden tile. The mixture was allowed to dry on the surface of the wooden tile.

Nine drops of water of approximately 0.75 ml each were placed on the surface of the coated wooden tile in a three-by-three square grid. The process was repeated on an identical uncoated wooden tile. Over the next 5 to 10 minutes, the water droplets on the uncoated wooden tile were observably absorbed into the surface of the wooden tile leaving wet circular stains on the surface. The water droplets placed on the coated wooden tile remained on the surface for a period of 5 hours at which point observation was stopped.

### Example 38 Coated Wood:

The coated wooden tile of the preceding example was sliced in half to produce two tiles of half the thickness of the original tile. The surface of each of the half thickness tiles that had previously been on the inside of the original thicker tile were subjected to the water droplet experiment described in the preceding Example 37. The water droplets were retained on the surfaces of each of the half thickness tiles for a period of 5 hours at which point observation was stopped.

### Example 39 Coated Painted Wood:

The experiment of example 37 was repeated using the sol of example 4 and pre-painted wooden tiles. The water droplets placed on the uncoated painted wooden tile were observed to be slowly absorbed into the surface of the tile across a period of 15-30 minutes. The water droplets placed on the surface of the coated wooden tile remained on the surface of the coated painted wooden tile for a period of 5 hours at which point observation was stopped.

### Example 40 Coated Paper:

Four sheets of A4 paper were coated with each one of the sols from Examples 1, 2 and 9 by brushing the sols onto a sheet of paper and drying the paper for 90 minutes at 60 °C. The coated paper was stored at room temperature for 4 weeks then tested for water impermeability. The coated paper was impermeable to water with no water passing through the coated paper.

### Example 41 Coated Electronic Circuit:

A circuit was printed on a piece of pre-washed fabric and coated in the sol of Example 8. The printed circuit on fabric was washed 15 times in a normal household washing machine under standard was conditions. After 15 washes, no loss of functionality in the circuit was observed. The printed fabrics were weighed before and after undergoing the 15 wash cycles. Negligible weight loss was recorded during the repeated washing process.

### Example 42 Coated Sand:

Sand was coated with the sol of Example 3 and allowed to dry. The dried, coated sand was arranged in a ring shape on the base of a container and water was poured into the interior of the ring. No water was observed to breach the ring of sand after three hours at which point the experiment was stopped. A second sample of equivalent mass of uncoated sand was arranged in a ring shape on the base of an identical container and water was poured into the interior of the ring. Water was observed to breach the uncoated ring of sand after 5 minutes.

### Example 43 Sols as an Additive:

Gum arabic was dissolved in warm water and left to cool. The sol of Example 1 was added to the Gum Arabic solution and mixed for 30 seconds before applying the mixed solution to uncoated paper. The experiment was repeated using gum arabic without any sol addition. The paper coated with the solution containing the sol additive become water impermeable and had a clear and transparent coating. The paper coated without the sol additive had a coating of uneven texture and colour that remained permeable to water.

Examples 44 to 67 presented in Table 2 demonstrate the coating performance of sols comprising various solvents, biopolymers and alkoxides upon various substrates at different dilution levels. All sols provided a coating which enhanced a material's hydrophobicity, impermeability and/or strength. Coating performance marked as 'best' indicates a coating of superior quality to those marked 'better', which in turn indicates a coating of superior quality to those marked 'good'.

**Table 2 Matrix of further sol examples**

| **#** | **Solvent(s)** | **Alkoxide(s)** | **Biopolymer** | **Coating Performance** | **Substrate** | **Dilution** |
|---|---|---|---|---|---|---|
| 44 | Ethanol, Ethylene Glycol | Tetraethylorthosilane, Triethoxy(octyl)silane, Tetrapropylorthosilicate, Triethoxyphenylsilane | Starch | Best | Metal | No |
| 45 | Ethanol, Tert-Butanol | Triethoxyoctylsilane, Tetraethylorthosilane | N/A | Good | Metal | No |
| 46 | Tert-Butanol | Methyltriethylsilane | Starch | Best | Metal | No |
| 47 | Ethanol | Methyltriethylsilane | Starch | Better | Metal | No |
| 48 | Ethanol | Zirconium(IV) butoxide | Starch | Good | Metal | No |
| 49 | Ethanol | Aluminium isopropoxide | Starch | Good | Metal | No |
| 50 | Ethylene Glycol | Tetraethylorthosilane | Wheat Flour | Better | Metal | No |
| 51 | Water | Triethoxy-3(2-imidazolin-1-yl)propylsilane | Starch | Unknown | Metal | No |
| 52 | Ethanol, Ethylene Glycol | Tetraethylorthosilane, Triethoxy(octyl)silane, Tetrapropylorthosilicate, Triethoxyphenylsilane | Starch | Better | Pulp Fibre | No |
| 53 | Ethanol, Tert-Butanol | Triethoxyoctylsilane, Tetraethylorthosilane | N/A | Better | Pulp Fibre | No |
| 54 | Tert-Butanol | Methyltriethylsilane | Starch | Best | Pulp Fibre | No |
| 55 | Ethanol | Methyltriethylsilane | Starch | Best | Pulp Fibre | No |
| 56 | Ethanol | Zirconium(IV) butoxide | Starch | Good | Pulp Fibre | No |
| 57 | Ethanol | Aluminium isopropoxide | Starch | Good | Pulp Fibre | No |
| 58 | Ethylene Glycol | Tetraethylorthosilane | Wheat Flour | Best | Pulp Fibre | No |
| 59 | Water | Triethoxy-3(2-imidazolin-1-yl)propylsilane | Starch | Best | Pulp Fibre | No |
| 60 | Ethanol, Ethylene Glycol | Tetraethylorthosilane, Triethoxy(octyl)silane, Tetrapropylorthosilicate, Triethoxyphenylsilane | Starch | Good | Pulp Fibre | 5% |
| 61 | Ethanol, Tert-Butanol | Triethoxyoctylsilane, Tetraethylorthosilane | N/A | Better | Pulp Fibre | 5% |
| 62 | Tert-Butanol | Methyltriethylsilane | Starch | Better | Pulp Fibre | 5% |
| 63 | Ethanol | Methyltriethylsilane | Starch | Best | Pulp Fibre | 5% |
| 64 | Ethanol | Zirconium(IV) butoxide | Starch | Good | Pulp Fibre | 5% |
| 65 | Ethanol | Aluminium isopropoxide | Starch | Good | Pulp Fibre | 5% |
| 66 | Ethylene Glycol | Tetraethylorthosilane | Wheat Flour | Unknown | Pulp Fibre | 5% |
| 67 | Water | Triethoxy-3(2-imidazolin-1-yl)propylsilane | Starch | Good | Pulp Fibre | 5% |

Examples 68 to 93 presented in Table 3 demonstrate the coating performance of sols comprising various flours with different catalysts upon various substrates at different dilution levels. All sols provided a coating which enhanced a material's hydrophobicity, impermeability and/or strength. Coating performance marked as 'best' indicates a coating of superior quality to those marked 'better', which in turn indicates a coating of superior quality to those marked 'good'. The sols of examples 68 to 93 are formed using ethanol as a solvent with tetraethylorthosilane and/or methyltriethoxysilane as alkoxides.

**Table 3 Matrix of flour sol examples**

| **#** | **Flour Type** | **Catalyst** | **Coating Performance** | **Substrate** | **Dilution** |
|---|---|---|---|---|---|
| 68 | Barley Flour | Base | Good | Metal | No |
| 69 | Corn Flour | Base | Good | Metal | No |
| 70 | Bamboo Flour | Base | Better | Metal | No |
| 71 | Oat Flour | Base | Better | Metal | No |
| 72 | Wheat Flour | Base | Better | Metal | No |
| 73 | Barley Flour | Base | Good | Pulp Fibre | No |
| 74 | Corn Flour | Base | Best | Pulp Fibre | No |
| 75 | Bamboo Flour | Base | Best | Pulp Fibre | No |
| 76 | Oat Flour | Base | Best | Pulp Fibre | No |
| 77 | Wheat Flour | Base | Best | Pulp Fibre | No |
| 78 | Barley Flour | Base | Better | Pulp Fibre | 5% |
| 79 | Corn Flour | Base | Best | Pulp Fibre | 5% |
| 80 | Bamboo Flour | Base | Best | Pulp Fibre | 5% |
| 81 | Oat Flour | Base | Good | Pulp Fibre | 5% |
| 82 | Barley Flour | Acid | Better | Metal | No |
| 83 | Corn Flour | Acid | Better | Metal | No |
| 84 | Bamboo Flour | Acid | Better | Metal | No |
| 85 | Oat Flour | Acid | Best | Metal | No |
| 86 | Barley Flour | Acid | Best | Pulp Fibre | No |
| 87 | Corn Flour | Acid | Best | Pulp Fibre | No |
| 88 | Bamboo Flour | Acid | Best | Pulp Fibre | No |
| 89 | Oat Flour | Acid | Best | Pulp Fibre | No |
| 90 | Barley Flour | Acid | Better | Pulp Fibre | 5% |
| 91 | Corn Flour | Acid | Best | Pulp Fibre | 5% |
| 92 | Bamboo Flour | Acid | Best | Pulp Fibre | 5% |
| 93 | Oat Flour | Acid | Good | Pulp Fibre | 5% |

## Claims

1. Use of a sol formed from a solvent, an alkoxide, a biopolymer, and a catalyst to prepare a water impermeable product from a porous and/or permeable material.

2. Use of a sol according to claim 1, wherein the sol forms a coating on one or more surfaces of the product, optionally wherein:
the sol fills or partially fills one or more pore volumes or void volumes of the product; and/or
the sol acts as a binder to promote cohesion of the product.

3. The use of a sol according to any preceding claim, wherein the product is a fibre-based product.

4. Use of a sol according to any preceding claim, wherein the alkoxide is selected from silicon alkoxides, metal alkoxides, phosphorus alkoxides, organically modified alkoxides, and any combination thereof, optionally wherein the alkoxide is selected from n-propyltriethoxysilane, tetrapropyl orthosilicate, titanium(IV) tert-butoxide, titanium(IV) isopropoxide, triethyloxysilane, methyltriethyloxysilane, triethoxy(octyl)silane, phenyl-triethoxysilane, titanium(IV) ethoxide, triethoxy-silylcyclopentane, (3-glycidyloxypropyl) trimethoxysilane, cyclopentyltriethoxysilane, 3-amino-propyltriethoxysilane, triethoxy-3-(2-imidazolin-1-yl)propylsilane, and any combination thereof.

5. Use of a sol according to any preceding claim, wherein the catalyst is at least one of an acid and/or a base, optionally wherein the catalyst is selected from hydrochloric acid, citric acid, nitric acid, acetic acid, sodium hydroxide, potassium hydroxide, ammonia, and any combination thereof.

6. Use of a sol according to any preceding claim, wherein the solvent comprises water, one or more alcohols, and any combination thereof, optionally wherein the solvent comprises methanol, ethanol, isopropanol, butanol, ethylene glycol or any combination thereof.

7. Use of a sol according to any preceding claim, wherein the water impermeable product is prepared by applying the sol to a product in the absence of any functional additives.

8. Use of a sol according to any of claims 1 to 6, wherein the sol comprises one or more functional additives, optionally wherein the one or more functional additives comprise photoinitiators, resins, oils, dyes, salts, mineral or other inorganic particles, surfactants, composite particles and/or metal particles.

9. Use of a sol according to any preceding claim, wherein the sol is added as a component additive to the material of the product and/or to one or more coatings applied to the product.

10. Use of a sol according to any preceding claim, wherein:
the product is a fibre-based product, and the water impermeable fibre-based product comprises pulp, paper, cardboard, board, or combinations thereof including composite fibre-based products and biocomposite fibre-based products; or
the product is a plastic or bioplastic; or
the product is an adhesive or paint.

11. Use of a sol according to any preceding claim, wherein the sol is applied during formation of the product to prepare a water impermeable product, optionally wherein the product is a fibre-based product, and the sol is applied during formation of a pulp slurry, wet pulp, air-laid pulp or dry pulp.

12. Use of a sol according to any preceding claim, wherein the sol is applied following formation of the product to prepare a water impermeable product, optionally wherein the product is a fibre-based product, and the sol is applied to a pulp slurry, wet pulp, air-laid pulp or dry pulp following formation of the pulp slurry, wet pulp, air-laid pulp or dry pulp.

13. Use of a sol according to claim 11 or 12, wherein the product is a fibre-based product, and the sol is applied during formation of a pulp slurry, wet pulp, air-laid pulp or dry pulp , and further wherein a water impermeable paper, cardboard, board, composite fibre-based product, or biocomposite fibre-based product is formed from the pulp slurry, air-laid pulp or dry pulp.

14. Use of a sol according to any preceding claim, wherein:
the sol is applied to a product by spraying the sol onto the product, soaking the product in the sol, dipping the product in the sol, roller coating the sol onto the product, brushing the sol onto the product, wiping the sol onto the product, impregnating the product with the sol by padding, exhausting the sol on the product, flowing the sol onto the product, the use of slit coating techniques, the use of blade application techniques, or any combination thereof; and/or
the sol is applied to the whole of a surface of a product or only a portion of a surface of a product.

15. Use of a sol according to any preceding claim, wherein the sol is applied to a product to form a base coating onto which further coatings can be applied or wherein the sol is applied to a product to form a coating over an existing coating, optionally wherein the base coating or top coating formed by application of the sol is optically transparent and/or gas impermeable and/or hydrophobic and/or oleophobic and/or stain resistant and/or antireflective.

16. Use of a sol according to any preceding claim, wherein the water impermeable product is used as primary, secondary or tertiary packaging; optionally wherein the packaging is used in the food and beverages, electronics, engineering, appliances, cosmetics, medical devices, pharmaceuticals, fashion, cosmetics, personal care, household products, interior or exterior decoration, home improvement, automotive, aviation, marine, defence or construction industries, and further optionally wherein the packaging is in the form of a container for use in the food and beverages industry.

17. Use of a sol according to any of claims 1 to 6 or 8 to 16, wherein the biopolymer is selected from the group comprising starch, cationic starch, modified starch, flour, wheat flour, barley flour, lentil flour, bamboo flour, corn flour, oat flour, rye flour, buckwheat flour, rice flour, chickpea flour, green pea flour, chitin, cellulose, hemi-cellulose, or any combination thereof.

18. A sol formed from a solvent, an alkoxide, a biopolymer, and a catalyst.

19. A sol according to claim 18, wherein:
the biopolymer comprises a starch, optionally wherein the starch comprises a cationic starch. optionally wherein the cationic starch is selected from quaternary ammonium type cationic starch, tertiary ammonium type cationic starch, and any combination thereof; or
the biopolymer comprises a flour.

20. A sol according to claim 19, wherein the biopolymer comprises a flour, and the flour comprises:
5 to 85% starch, 0 to 30% hemi-cellulose, 0 to 50% cellulose, 0 to 25% lignin, 0 to 35% protein and 0 to 25% ash; or
45 to 85% starch, 0 to 15% hemi-cellulose, 0 to 10% cellulose, 0 to 7% lignin, 10-15% protein and 0 to 5% ash.

21. A sol according to claim 19 or 20, wherein the biopolymer comprises a flour, and the flour is selected from the group wheat flour, barley flour, lentil flour, bamboo flour, corn flour, oat flour, rye flour, buckwheat flour, rice flour, chickpea flour, green pea flour, or any combination thereof.

22. A sol according to any of claims 18 to 21, wherein the catalyst is at least one of an acid and a base, optionally wherein the catalyst is selected from hydrochloric acid, citric acid, nitric acid, acetic acid, sodium hydroxide, potassium hydroxide, ammonia, and any combination thereof.

23. A sol according to any of claims 18 to 22, wherein the alkoxide is selected from silicon alkoxides, metal alkoxides, phosphorus alkoxides, and any combination thereof, optionally wherein the alkoxide is selected from n-propyltriethoxysilane, tetrapropyl orthosilicate, titanium(IV) tert-butoxide, titanium(IV) isopropoxide, triethyloxysilane, methyltriethyloxysilane, triethoxy(octyl)silane, phenyl-triethoxysilane, titanium(IV) ethoxide, triethoxy-silylcyclopentane, (3-glycidyloxypropyl) trimethoxysilane, cyclopentyltriethoxysilane, 3-amino-propyltriethoxysilane, triethoxy-3-(2-imidazolin-1-yl)propylsilane, and any combination thereof.

24. A sol according to any of claims 18 to 23, wherein the solvent comprises water, one or more alcohols, and any combination thereof, optionally wherein the solvent comprises methanol, ethanol, isopropanol, butanol, ethylene glycol or any combination thereof.

25. A sol according to any of claims 18 to 24, wherein the sol comprises one or more functional additives, optionally wherein the one or more functional additives comprise photoinitiators, resins, oils, dyes, salts, mineral or other inorganic particles, surfactants, composite particles and/or metal particles.

26. A method of making a sol according to any of claims 18 to 25, the method comprising:
a) dispersing a biopolymer in a solution comprising a catalyst and then adding an alkoxide; or
b) dispersing an alkoxide in a solvent, adding a catalyst and then adding a biopolymer; or
c) dispersing an alkoxide in a solution comprising a catalyst and then adding a biopolymer.

27. A method according to claim 26, wherein the catalyst is at least one of an acid or a base.

28. A method according to claim 26 or 27, wherein the method further comprises adding one or more functional additives and/or one or more substrates, optionally wherein:
the one or more functional additives and/or one or more substrates are added before formation of the sol; or
the one or more functional additives and/or one or more substrates are added during the formation of the sol; or
the one or more functional additives and/or one or more substrates are added after the formation of the sol.

29. A coated product wherein the product has been coated with a sol according to any one of claims 18 to 25.

30. A coated product according to claim 29, wherein the coating is water impermeable and/or optically transparent and/or gas impermeable and/or anti-microbial and/or hydrophobic and/or oleophobic and/or anti-fouling and/or anti-biofouling and/or stain resistant and/or adhesion promoting and/or antireflective.

31. A coated product according to claim 29 or 30 wherein the product comprises wood, textiles, leather, metal, concrete, cardboard, paper, plastic, bioplastic, glass, ceramics, sand, electronic circuitry, brick, marble, soil, painted surfaces and combinations thereof, wherein combinations thereof includes composite products and biocomposite products.

32. A coated product according to any one of claims 29 to 31 wherein the product is in the form of molecules, particles, fibres, moulded products, sheets and combinations thereof.

## Patentansprüche

1. Verwenden eines aus einem Lösungsmittel, einem Alkoxid, einem Biopolymer und einem Katalysator gebildeten Sols für ein Herstellen eines wasserundurchlässigen Produkts aus einem porösen und/oder durchlässigen Material.

2. Verwenden eines Sols nach Anspruch 1, wobei das Sol eine Beschichtung auf einer oder mehreren Flächen des Produkts bildet, gegebenenfalls wobei:
das Sol ein oder mehrere Porenvolumina oder Hohlraumvolumina des Produkts füllt oder teilweise füllt; und/oder
das Sol als Bindemittel wirkt, um die Kohäsion des Produkts zu fördern.

3. Verwenden eines Sols nach einem beliebigen vorhergehenden Anspruch, wobei das Produkt ein faserbasiertes Produkt ist.

4. Verwenden eines Sols nach einem beliebigen vorhergehenden Anspruch, wobei das Alkoxid ausgewählt ist aus Siliciumalkoxiden, Metallalkoxiden, Phosphoralkoxiden, organisch modifizierten Alkoxiden und einer beliebigen Kombination davon, wobei das Alkoxid gegebenenfalls ausgewählt ist aus n-Propyltriethoxysilan, Tetrapropylorthosilikat, Titan(IV)-tert.-butoxid, Titan(IV)-Isopropoxid, Triethyloxysilan, Methyltriethyloxysilan, Triethoxy(octyl)silan, Phenyltriethoxysilan, Titan(IV)-Ethoxid, Triethoxy-Silylcyclopentan, (3-Glycidyloxypropyl)trimethoxysilan, Cyclopentyltriethoxysilan, 3-Amino-propyltriethoxysilan, Triethoxy-3-(2-imidazolin-1-yl)propylsilan und einer beliebigen Kombination davon.

5. Verwenden eines Sols nach einem beliebigen vorhergehenden Anspruch, wobei der Katalysator mindestens eine Säure und/oder eine Base ist, wobei der Katalysator gegebenenfalls ausgewählt ist aus Salzsäure, Zitronensäure, Salpetersäure, Essigsäure, Natriumhydroxid, Kaliumhydroxid, Ammoniak und einer beliebigen Kombination davon.

6. Verwenden eines Sols nach einem beliebigen vorhergehenden Anspruch, wobei das Lösungsmittel Wasser, einen oder mehrere Alkohole und eine beliebige Kombination davon umfasst, wobei das Lösungsmittel gegebenenfalls Methanol, Ethanol, Isopropanol, Butanol, Ethylenglykol oder eine beliebige Kombination davon umfasst.

7. Verwendung eines Sols nach einem beliebigen vorhergehenden Anspruch, wobei das wasserundurchlässige Produkt durch Auftragen des Sols auf ein Produkt in Abwesenheit jeglicher funktioneller Additive hergestellt wird.

8. Verwenden eines Sols nach einem der Ansprüche 1 bis **6,** wobei das Sol ein oder mehrere funktionelle Additive umfasst, wobei das eine oder die mehreren funktionellen Additive gegebenenfalls Photoinitiatoren, Harze, Öle, Farbstoffe, Salze, mineralische oder andere anorganische Partikel, Tenside, Verbundpartikel und/oder Metallpartikel umfassen.

9. Verwenden eines Sols nach einem beliebigen vorhergehenden Anspruch, wobei das Sol dem Material des Produkts und/oder einer oder mehreren auf das Produkt aufgetragenen Beschichtungen als Bestandteiladditiv zugesetzt wird.

10. Verwenden eines Sols nach einem beliebigen vorhergehenden Anspruch, wobei:
das Produkt ein faserbasiertes Produkt ist und das wasserundurchlässige faserbasierte Produkt Zellstoff, Papier, Pappe, Karton oder Kombinationen davon umfasst, einschließlich faserbasierter Verbundprodukte und faserbasierter Bioverbundprodukte; oder
das Produkt ein Kunststoff oder Biokunststoff ist; oder
das Produkt ein Klebstoff oder eine Farbe ist.

11. Verwenden eines Sols nach einem der vorhergehenden Ansprüche, wobei das Sol während eines Bildens des Produkts aufgebracht wird, um ein wasserundurchlässiges Produkt herzustellen, wobei das Produkt optional ein faserbasiertes Produkt ist und das Sol während des Bildens eines Zellstoffschlamms, Nasszellstoffs, luftgelegten Zellstoffs oder Trockenzellstoffs aufgebracht wird.

12. Verwenden eines Sols nach einem der vorhergehenden Ansprüche, wobei das Sol nach einem Bilden des Produkts aufgebracht wird, um ein wasserundurchlässiges Produkt herzustellen, wobei das Produkt optional ein faserbasiertes Produkt ist und das Sol nach einem Bilden eines Zellstoffschlamms, Nasszellstoffs, luftgelegten Zellstoffs oder Trockenzellstoffs aufgebracht wird.

13. Verwenden eines Sols nach Anspruch 11 oder 12, wobei das Produkt ein faserbasiertes Produkt ist und das Sol während des Bildens einer Zellstoffaufschlämmung, eines Nasszellstoffs, eines luftgelegten Zellstoffs oder eines Trockenzellstoffs aufgebracht wird, und wobei ferner wasserundurchlässiges Papier, Karton, Pappe, faserbasiertes Verbundprodukt oder faserbasiertes Bioverbundprodukt aus der Zellstoffaufschlämmung, dem luftgelegten Zellstoff oder dem Trockenzellstoff gebildet wird.

14. Verwenden eines Sols nach einem beliebigen vorhergehenden Anspruch, wobei:
das Sol auf das Produkt durch Sprühen des Sols auf das Produkt, Eintauchen des Produkts in das Sol, Tauchen des Produkts in das Sol, Walzenbeschichten des Sols auf das Produkt, Streichen des Sols auf das Produkt, Wischen des Sols auf das Produkt, Imprägnieren des Produkts mit dem Sol durch Padding, Auslaugen des Sols auf das Produkt, Fluten des Sols auf das Produkt, die Verwendung von Schlitzbeschichtungsverfahren, die Verwendung von Rakelauftragstechniken oder jede Kombination davon aufgebracht wird; und/oder
das Sol auf die gesamte Fläche eines Produktes oder nur auf einen Abschnitt der Fläche eines Produktes aufgebracht wird.

15. Verwenden eines Sols nach einem beliebigen vorhergehenden Anspruch, wobei das Sol auf ein Produkt aufgebracht wird, um eine Basisbeschichtung zu bilden, auf die weitere Beschichtungen aufgebracht werden können, oder wobei das Sol auf ein Produkt aufgebracht wird, um eine Beschichtung über einer bestehenden Beschichtung zu bilden, wobei die durch Aufbringen des Sols gebildete Basisbeschichtung oder Deckbeschichtung wahlweise optisch transparent und/oder gasundurchlässig und/oder hydrophob und/oder oleophob und/oder schmutzabweisend und/oder antireflektierend ist.

16. Verwenden eines Sols nach einem beliebigen vorhergehenden Anspruch, wobei das wasserundurchlässige Produkt als Primär-, Sekundär- oder Tertiärverpackung verwendet wird; wobei die Verpackung wahlweise in den Branchen Nahrungsmittel und Getränke, Elektronik, Maschinenbau, Haushaltsgeräte, Kosmetik, medizinische Geräte, Pharmazeutika, Mode, Körperpflege, Haushaltsprodukte, Innen- oder Außendekoration, Heimwerkerbedarf, Automobil, Luftfahrt, Schifffahrt, Verteidigung oder Bauwesen verwendet wird und wobei die Verpackung wahlweise die Form eines Behälters für eine Verwendung in der Nahrungsmittel- und Getränkeindustrie aufweist.

17. Verwenden eines Sols nach einem der Ansprüche 1 bis 6 oder 8 bis 16, wobei das Biopolymer ausgewählt ist aus der Gruppe umfassend Stärke, kationischer Stärke, modifizierter Stärke, Mehl, Weizenmehl, Gerstenmehl, Linsenmehl, Bambusmehl, Maismehl, Hafermehl, Roggenmehl, Buchweizenmehl, Reismehl, Kichererbsenmehl, grünem Erbsenmehl, Chitin, Cellulose, Hemicellulose oder einer Kombination davon.

18. Sol, gebildet aus einem Lösungsmittel, einem Alkoxid, einem Biopolymer und einem Katalysator.

19. Sol nach Anspruch 18, wobei:
das Biopolymer eine Stärke umfasst, wobei die Stärke gegebenenfalls eine kationische Stärke umfasst, wobei die kationische Stärke gegebenenfalls ausgewählt ist aus kationischer Stärke des Typs quaternäres Ammonium, kationischer Stärke des Typs tertiäres Ammonium und einer beliebigen Kombination davon; oder
das Biopolymer ein Mehl umfasst.

20. Sol nach Anspruch 19, wobei das Biopolymer ein Mehl umfasst, und das Mehl umfasst:
5 bis 85 % Stärke, 0 bis 30 % Hemizellulose, 0 bis 50 % Zellulose, 0 bis 25 % Lignin, 0 bis 35 % Protein und 0 bis 25 % Asche; oder
45 bis 85 % Stärke, 0 bis 15 % Hemizellulose, 0 bis 10 % Zellulose, 0 bis 7 % Lignin, 10 bis 15 % Protein und 0 bis 5 % Asche.

21. Sol nach Anspruch 19 oder 20, wobei das Biopolymer ein Mehl umfasst und das Mehl ausgewählt ist aus der Gruppe Weizenmehl, Gerstenmehl, Linsenmehl, Bambusmehl, Maismehl, Hafermehl, Roggenmehl, Buchweizenmehl, Reismehl, Kichererbsenmehl, grünes Erbsenmehl oder einer beliebigen Kombination davon.

22. Sol nach einem der Ansprüche 18 bis 21, wobei der Katalysator mindestens eines von einer Säure und einer Base ist, wobei der Katalysator gegebenenfalls ausgewählt ist aus Salzsäure, Zitronensäure, Salpetersäure, Essigsäure, Natriumhydroxid, Kaliumhydroxid, Ammoniak und einer beliebigen Kombination davon.

23. Sol nach einem der Ansprüche 18 bis 22, wobei das Alkoxid ausgewählt ist aus Siliciumalkoxiden, Metallalkoxiden, Phosphoralkoxiden und einer beliebigen Kombination davon, wobei das Alkoxid gegebenenfalls ausgewählt ist aus n-Propyltriethoxysilan, Tetrapropylorthosilicat, Titan(IV)-tert.-butoxid, Titan(IV)-isopropoxid, Triethyloxysilan, Methyltriethyloxysilan, Triethoxy(octyl)silan, Phenyltriethoxysilan, Titan(IV)-ethoxid, Triethoxysilylcyclopentan, (3-Glycidyloxypropyl)-trimethoxysilan, Cyclopentyltriethoxysilan, 3-Amino-propyltriethoxysilan, Triethoxy-3-(2-imidazolin-1-yl)propylsilan und einer beliebigen Kombination davon.

24. Sol nach einem der Ansprüche 18 bis 23, wobei das Lösungsmittel Wasser, einen oder mehrere Alkohole und eine beliebige Kombination davon umfasst, wobei das Lösungsmittel gegebenenfalls Methanol, Ethanol, Isopropanol, Butanol, Ethylenglykol oder eine beliebige Kombination davon umfasst.

25. Sol nach einem der Ansprüche 18 bis 24, wobei das Sol ein oder mehrere funktionelle Additive umfasst, wobei das eine oder die mehreren funktionellen Additive gegebenenfalls Photoinitiatoren, Harze, Öle, Farbstoffe, Salze, mineralische oder andere anorganische Partikel, Tenside, Verbundpartikel und/oder Metallpartikel umfassen.

26. Verfahren des Herstellens eines Sols nach einem der Ansprüche 18 bis 25, das Verfahren umfassend:
a) Dispergieren eines Biopolymers in einer Lösung, die einen Katalysator umfasst, und dann Zugeben eines Alkoxids; oder
b) Dispergieren eines Alkoxids in einem Lösungsmittel, Zugeben eines Katalysators und dann Zugeben eines Biopolymers; oder
c) Dispergieren eines Alkoxids in einer Lösung, die einen Katalysator umfasst, und dann Zugeben eines Biopolymers.

27. Verfahren nach Anspruch 26, wobei der Katalysator mindestens eines von einer Säure oder einer Base ist.

28. Verfahren nach Anspruch 26 oder 27, wobei das Verfahren ferner ein Zugeben von einem oder mehreren funktionellen Additiven und/oder einem oder mehreren Substraten umfasst, optional wobei:
das eine oder die mehreren funktionellen Additive und/oder das eine oder die mehreren Substrate vor einer Bildung des Sols zugegeben werden; oder
das eine oder die mehreren funktionellen Additive und/oder das eine oder die mehreren Substrate während der Bildung des Sols zugegeben werden; oder
das eine oder die mehreren funktionellen Additive und/oder das eine oder die mehreren Substrate nach der Bildung des Sols zugegeben werden.

29. Beschichtetes Produkt, wobei das Produkt mit einem Sol gemäß einem der Ansprüche 18 bis 25 beschichtet wurde.

30. Beschichtetes Produkt nach Anspruch 29, wobei die Beschichtung wasserundurchlässig und/oder optisch transparent und/oder gasundurchlässig und/oder antimikrobiell und/oder hydrophob und/oder oleophob und/oder bewuchshemmend und/oder biobewuchshemmend und/oder schmutzabweisend und/oder haftungsfördernd und/oder antireflektierend ist.

31. Beschichtetes Produkt nach Anspruch 29 oder 30, wobei das Produkt Holz, Textilien, Leder, Metall, Beton, Pappe, Papier, Kunststoff, Biokunststoff, Glas, Keramik, Sand, elektronische Schaltkreise, Ziegel, Marmor, Erde, bemalte Flächen und Kombinationen davon umfasst, wobei die Kombinationen davon Verbundprodukte und Bioverbundprodukte umfassen.

32. Beschichtetes Produkt nach einem der Ansprüche 29 bis 31, wobei das Produkt in Form von Molekülen, Partikeln, Fasern, geformten Produkten, Folien und Kombinationen davon vorliegt.

## Revendications

1. Utilisation d'un sol formé à partir d'un solvant, d'un alcoolate, d'un biopolymère et d'un catalyseur pour préparer un produit imperméable à l'eau à partir d'un matériau poreux et/ou perméable.

2. Utilisation d'un sol selon la revendication 1, dans laquelle le sol forme un revêtement sur une ou plusieurs surfaces du produit, dans laquelle facultativement :
le sol remplit ou remplit partiellement un ou plusieurs volumes poreux ou volumes vides du produit ; et/ou
le sol agit comme un liant pour favoriser la cohésion du produit.

3. Utilisation d'un sol selon l'une quelconque des revendications précédentes, dans laquelle le produit est un produit à base de fibres.

4. Utilisation d'un sol selon l'une quelconque des revendications précédentes, dans laquelle l'alcoolate est choisi parmi les alcoolates de silicium, alcoolates métalliques, alcoolates de phosphore, alcoolates modifiés organiquement, et toute combinaison de ceux-ci, facultativement dans laquelle l'alcoolate est choisi parmi n-propyltriéthoxysilane, orthosilicate de tétrapropyle, le tert-butylate de titane (IV), isopropylate de titane(IV), triéthyloxysilane, méthyltriéthyloxysilane, triéthoxy(octyl)silane, phényl-triéthoxysilane, éthoxyde de titane(IV), triéthoxy-silylcyclopentane, (3-glycidyloxypropyl)triméthoxysilane, cyclopentyltriéthoxysilane, 3-amino-propyltriéthoxysilane, triéthoxy-3-(2-imidazolin-1-yl)propylsilane, et toute combinaison de ceux-ci.

5. Utilisation d'un sol selon l'une quelconque des revendications précédentes, dans laquelle le catalyseur est au moins l'un parmi un acide et/ou une base, facultativement dans laquelle le catalyseur est choisi parmi l'acide chlorhydrique, l'acide citrique, l'acide nitrique, l'acide acétique, l'hydroxyde de sodium, l'hydroxyde de potassium, l'ammoniaque et toute combinaison de ceux-ci.

6. Utilisation d'un sol selon l'une quelconque des revendications précédentes, dans laquelle le solvant comprend de l'eau, un ou plusieurs alcools, et toute combinaison de ceux-ci, facultativement dans laquelle le solvant comprend du méthanol, de l'éthanol, de l'isopropanol, du butanol, de l'éthylèneglycol ou toute combinaison de ceux-ci.

7. Utilisation d'un sol selon l'une quelconque des revendications précédentes, dans laquelle le produit imperméable à l'eau est préparé en appliquant le sol à un produit en l'absence de tout additif fonctionnel.

8. Utilisation d'un sol selon l'une quelconque des revendications 1 à 6, dans laquelle le sol comprend un ou plusieurs additifs fonctionnels, facultativement dans laquelle les un ou plusieurs additifs fonctionnels comprennent des photoamorceurs, des résines, des huiles, des colorants, des sels, des particules minérales ou autres particules inorganiques, des tensioactifs, des particules composites et/ou des particules métalliques.

9. Utilisation d'un sol selon l'une quelconque des revendications précédentes, dans laquelle le sol est ajouté en tant qu'additif de composant au matériau du produit et/ou à un ou plusieurs revêtements appliqués au produit.

10. Utilisation d'un sol selon l'une quelconque des revendications précédentes, dans laquelle :
le produit est un produit à base de fibres, et le produit à base de fibres imperméable à l'eau comprend de la pâte, du papier, du carton, du carton ordinaire, ou des combinaisons de ceux-ci y compris des produits à base de fibres composites et des produits à base de fibres biocomposites ; ou
le produit est un plastique ou un bioplastique ; ou
le produit est un adhésif ou une peinture.

11. Utilisation d'un sol selon l'une quelconque des revendications précédentes, dans laquelle le sol est appliqué pendant la formation du produit pour préparer un produit imperméable à l'eau, facultativement dans laquelle le produit est un produit à base de fibres, et le sol est appliqué pendant la formation d'une suspension de pâte, d'une pâte humide, d'une pâte formée par voie sèche ou d'une pâte sèche.

12. Utilisation d'un sol selon l'une quelconque des revendications précédentes, dans laquelle le sol est appliqué après la formation du produit pour préparer un produit imperméable à l'eau, facultativement dans laquelle le produit est un produit à base de fibres, et le sol est appliqué à une suspension de pâte, une pâte humide, une pâte formée par voie sèche ou une pâte sèche après la formation de la suspension de pâte, de la pâte humide, de la pâte formée par voie sèche ou de la pâte sèche.

13. Utilisation d'un sol selon la revendication 11 ou 12, dans laquelle le produit est un produit à base de fibres, et le sol est appliqué pendant la formation d'une suspension de pâte, d'une pâte humide, d'une pâte formée par voie sèche ou d'une pâte sèche, et en outre dans laquelle un papier imperméable à l'eau, du carton, du carton ordinaire, un produit à base de fibres composites ou un produit à base de fibres biocomposites est formé à partir de la suspension de pâte, de la pâte formée par voie sèche ou de la pâte sèche.

14. Utilisation d'un sol selon l'une quelconque des revendications précédentes, dans laquelle :
le sol est appliqué sur un produit par pulvérisation du sol sur le produit, par imbibition du produit dans le sol, par trempage du produit dans le sol, par enduction au rouleau du sol, par fibrillation du sol sur le produit, par essuyage du sol sur le produit, par imprégnation du produit avec le sol par remplissage, par évacuation du sol sur le produit, par écoulement du sol sur le produit, par utilisation de techniques d'application de revêtement par fente, par utilisation de techniques d'application par lame, ou toute combinaison de ceux-ci ; et/ou
le sol est appliqué sur la totalité d'une surface d'un produit ou sur une portion seulement d'une surface d'un produit.

15. Utilisation d'un sol selon l'une quelconque des revendications précédentes, dans laquelle le sol est appliqué à un produit pour former un revêtement de base sur lequel d'autres revêtements peuvent être appliqués ou dans laquelle le sol est appliqué à un produit pour former un revêtement sur un revêtement existant, facultativement dans laquelle le revêtement de base ou le revêtement supérieur formé par application du sol est optiquement transparent et/ou imperméable aux gaz et/ou hydrophobe et/ou oléophobe et/ou antiréfléchissant.

16. Utilisation d'un sol selon l'une quelconque des revendications précédentes, dans laquelle le produit imperméable à l'eau est utilisé comme emballage primaire, secondaire ou tertiaire ; dans lequel l'emballage est facultativement utilisé dans les aliments et les boissons, l'électronique, la technique, des appareils, des cosmétiques, des dispositifs médicaux, des produits pharmaceutiques, la mode, des cosmétiques, des soins personnels, des produits ménagers, décoration intérieure ou extérieure, la rénovation domestique, les secteurs de l'automobile, de l'aviation, de la marine, de la défense ou du bâtiment, et facultativement dans laquelle l'emballage se présente sous la forme d'un récipient destiné à être utilisé dans le secteur agroalimentaire.

17. Utilisation d'un sol selon l'une quelconque des revendications 1 à 6 ou 8 à 16, dans laquelle le biopolymère est choisi dans le groupe comprenant l'amidon, l'amidon cationique, l'amidon modifié, la farine, la farine de blé, la farine d'orge, la farine de lentille, la farine de bambou, la farine de maïs, la farine d'avoine, la farine de seigle, la farine de sarrasin, la farine de riz, la farine de pois chiches, la farine de petits pois, la chitine, la cellulose, l'hémicellulose, ou toute combinaison de ceux-ci.

18. Sol formé à partir d'un solvant, d'un alcoolate, d'un biopolymère et d'un catalyseur.

19. Sol selon la revendication 18, dans lequel :
le biopolymère comprend un amidon, dans lequel l'amidon comprend facultativement un amidon cationique, dans lequel facultativement l'amidon cationique est choisi parmi un amidon cationique de type ammonium quaternaire, un amidon cationique de type ammonium tertiaire, et toute combinaison de ceux-ci ; ou
le biopolymère comprend une farine.

20. Sol selon la revendication 19, dans lequel le biopolymère comprend une farine, et la farine comprend :
5 à 85 % d'amidon, 0 à 30 % d'hémicellulose, 0 à 50 % de cellulose, 0 à 25 % de lignine, 0 à 35 % de protéine et 0 à 25 % de cendres ; ou
45 à 85 % d'amidon, 0 à 15 % d'hémicellulose, 0 à 10 % de cellulose, 0 à 7 % de lignine, 10 à 15 % de protéine et 0 à 5 % de cendres.

21. Sol selon la revendication 19 ou 20, dans lequel le biopolymère comprend une farine, et la farine est choisie dans le groupe constitué par la farine de blé, la farine d'orge, la farine de lentille, la farine de bambou, la farine de maïs, la farine d'avoine, la farine de seigle, la farine de sarrasin, la farine de riz, la farine de pois chiches, la farine de petits pois, ou toute combinaison de celles-ci.

22. Sol selon la revendication 18 à 21, dans lequel le catalyseur est au moins l'un parmi un acide et une base, facultativement dans laquelle le catalyseur est choisi parmi l'acide chlorhydrique, l'acide citrique, l'acide nitrique, l'acide acétique, l'hydroxyde de sodium, l'hydroxyde de potassium, l'ammoniaque et toute combinaison de ceux-ci.

23. Sol selon la revendication 18 à 22, dans lequel l'alcoolate est choisi parmi les alcoolates de silicium, alcoolates métalliques, alcoolates de phosphore et toute combinaison de ceux-ci, facultativement dans lequel l'alcoolate est choisi parmi n-propyltriéthoxysilane, orthosilicate de tétrapropyle, le tert-butylate de titane(IV), isopropylate de titane(IV), triéthyloxysilane, méthyltriéthyloxysilane, triéthoxy(octyl)silane, phényl-triéthoxysilane, éthoxyde de titane(IV), triéthoxy-silylcyclopentane, (3-glycidyloxypropyl)triméthoxysilane, cyclopentyltriéthoxysilane, 3-amino-propyltriéthoxysilane, triéthoxy-3-(2-imidazolin-1-yl)propylsilane, et toute combinaison de ceux-ci.

24. Sol selon la revendication 18 à 23, dans lequel le solvant comprend de l'eau, un ou plusieurs alcools, et toute combinaison de ceux-ci, facultativement dans laquelle le solvant comprend du méthanol, de l'éthanol, de l'isopropanol, du butanol, de l'éthylèneglycol ou toute combinaison de ceux-ci.

25. Sol selon la revendication 18 à 24, dans lequel le sol comprend un ou plusieurs additifs fonctionnels, facultativement dans laquelle les un ou plusieurs additifs fonctionnels comprennent des photoamorceurs, des résines, des huiles, des colorants, des sels, des particules minérales ou autres particules inorganiques, des tensioactifs, des particules composites et/ou des particules métalliques.

26. Procédé de fabrication d'un sol selon l'une quelconque des revendications 18 à 25, le procédé comprenant :
a) la dispersion d'un biopolymère dans une solution comprenant un catalyseur et ensuite l'ajout d'un alcoolate ; ou
b) la dispersion d'un alcoolate dans un solvant, l'ajout d'un catalyseur et ensuite l'ajout d'un biopolymère ; ou
c) la dispersion d'un alcoolate dans une solution comprenant un catalyseur et ensuite l'ajout d'un biopolymère.

27. Procédé selon la revendication 26, dans lequel le catalyseur est au moins l'un d'un acide ou d'une base.

28. Procédé selon la revendication 26 ou 27, dans lequel le procédé comprend en outre l'ajour d'un ou plusieurs additifs fonctionnels et/ou d'un ou plusieurs substrats, facultativement dans lequel :
les un ou plusieurs additifs fonctionnels et/ou les un ou plusieurs substrats sont ajoutés avant la formation du sol ; ou
les un ou plusieurs additifs fonctionnels et/ou les un ou plusieurs substrats sont ajoutés pendant la formation du sol ; ou
les un ou plusieurs additifs fonctionnels et/ou les un ou plusieurs substrats sont ajoutés après la formation du sol.

29. Produit revêtu dans lequel le produit a été revêtu d'un sol selon l'une quelconque des revendications 18 à 25.

30. Produit revêtu selon la revendication 29, dans lequel le revêtement est imperméable à l'eau et/ou optiquement transparent et/ou imperméable aux gaz et/ou antimicrobien et/ou hydrophobe et/ou oléophobe et/ou antisalissure et/ou anti-biosalissure et/ou antitaches et/ou promoteur d'adhérence et/ou antiréfléchissant.

31. Produit revêtu selon la revendication 29 ou 30, dans lequel le produit comprend du bois, des textiles, du cuir, du métal, du béton, du carton, du papier, du plastique, du bioplastique, du verre, de la céramique, du sable, des circuits électroniques, de la brique, du marbre, de la terre, des surfaces peintes et des combinaisons de ceux-ci, dans lequel des combinaisons de ceux-ci incluent des produits composites et des produits biocomposites.

32. Produit revêtu selon l'une quelconque des revendications 29 à 31, dans lequel le produit est sous la forme de molécules, de particules, de fibres, de produits moulés, de feuilles et de combinaisons de ceux-ci.
